# EUROPEAN PATENT SPECIFICATION

(11) **EP 4 480 680 B1**
(45) Date of publication and mention of the grant of the patent: **07.10.2026**
(21) Application number: 24183598.2
(22) Date of filing: 21.06.2024
(51) Int. Cl.: B29C 65/10, B27D 5/00, B29C 63/00, B29C 63/02, B29C 65/48, B29L 31/00

(54) **EDGING MACHINE FOR APPLYING AN EDGING TAPE ON A PROFILE OF A DOOR OR A JAMB**
KANTENANLEGEMASCHINE ZUM AUFBRINGEN EINES KANTENBANDES AUF EIN PROFIL EINER TÜR ODER EINES TÜRPFOSTENS
MACHINE À BORDER POUR L'APPLICATION D'UNE BANDE DE BORDURE SUR UN PROFIL D'UNE PORTE OU D'UN CHAMBRANLE

(30) Priority: 22.06.2023 IT 202300012927
(43) Date of publication of application: 25.12.2024
(73) Proprietor: SCM Group S.p.A., 47921 Rimini (RN) (IT)
(72) Inventor: PENZO, Alessandro, 47921 RIMINI (IT)
(74) Representative: Ferriero, Paolo

(56) References cited:
- CN-A- 106 903 774
- CN-A- 115 535 352
- KR-B1- 102 300 850

## Description

The present invention relates to an edging machine for applying an edging tape on a door/jamb.

### Field of the invention

In particular, the invention relates to the structure of an edging machine comprising a plurality of pressing device holder modules, each of which comprises a respective pressing device to exert a respective pressure on an edging tape applied to a profile of a door/jamb so that the edging tape adheres to said profile of said door/jamb.

More specifically, the pressing device holder modules of said plurality of pressing device holder modules are independent of each other and the pressing device of each of them acts on a respective portion of the edging tape applied on said profile of said door/jamb.

The profile of said door/jamb comprises straight and/or inclined parts arranged in succession in such a way as to form one or more corners and it is necessary that the edging tape also adheres well to portions of said profile arranged near said corners.

In general, each rectilinear part is a face of the profile of said door/jamb and a profile of said door/jamb comprises three faces arranged in succession such that a first angle is formed between the first face and the second face and a second angle is formed between the second face and the third face.

In the following the description will be directed to an edging machine for applying an edging tape on a door profile, in particular the profile of a door intended to abut with a jamb, but it is clear that the same description does not should be considered limited to this specific use.

In fact, as mentioned, through the same edging machine it is possible to apply an edging tape on a jamb.

### Prior art

As is known, an edging machine applies an edging tape on a profile of a door/jamb through a gluing unit.

After an edging tape has been glued onto said profile of a door/jamb, said edging tape is subjected to receiving pressure to adhere correctly to said profile.

For this purpose, an edging machine of known type comprises one or more sectors, each of which is provided with a respective plurality of pressing devices.

Each pressing device of the plurality of pressing devices of a sector exerts a respective pressure on the edging tape applied on said profile, so that said edging tape adheres to said profile.

Each sector comprises two bars and two connecting elements between said bars.

The two connecting elements also serve as bar spacers.

In particular, each bar has a respective first end and a respective second end.

The first ends of said bars are connected to each other by a first connecting element and the second ends are connected to each other by a second connecting element.

Said two connecting elements keep the bars parallel to each other.

The pressing devices of each sector are connected to the two bars of the respective sector.

In particular, the pressing devices of each sector have a respective shape and respective size, as well as a respective inclination with respect to the sector itself, based on the profile of the door/jamb.

To give an example, the pressing devices can be pads intended to come into contact with the profile of a door/jamb in order to exert pressure on a portion of the edging tape against a portion of a face of the profile of said door/jamb.

In other words, a sector of the known type of edging machine is designed to facilitate the adhesion of an edging tape on a respective profile of a door/jamb through the pressing devices part of the sector itself.

As is clear, the application of an edging tape on a profile of a door/jamb is a gradual and progressive process over time.

In fact, this process includes various steps which are carried out over time by the edging machine, such as for example the step of applying a quantity of glue on a profile of a door/jamb, the step of applying an edging tape on said profile of said door/jamb, and the step of exerting pressure on said edging tape so that said edging tape adheres to said profile of said door/jamb.

Each pressing device mounted on a sector (designed for a specific door/jamb profile) exerts pressure on a respective portion of the edging tape to facilitate the adhesion of said portion of edging tape on said profile of said door/jamb.

The fact that the edging machine can be provided with a plurality of sectors allows the application of an edging tape to a number of types of doors/jamb equal to the number of sectors, since each sector is provided with a respective plurality of pressing devices configured to apply an edging tape on a respective door/jamb profile.

For example, if the edging machine is provided with four sectors, it is possible to apply an edging tape on four different types of door/jamb.

Regardless of the number of sectors of the edging machine, it is possible to apply one edging tape at a time.

A disadvantage of said known type edging machine is due to the need to replace a sector with a further sector in the event that the edging machine does not include a sector designed for a door/jamb profile on which an edging tape is to be applied.

Consequently, it is necessary to dismantle a sector from the edging machine and mount a further sector to replace said sector with the consequent loss of time.

A further disadvantage is due to the fact that it is necessary to put the edging machine in stand-by mode to replace the sector with a further sector.

Furthermore, the documents KR102300850B1, CN106903774A and CN115535352A are representative of further technical solutions of known type. In partiular, KR102300850B1 discloses an edge banding machine for applying an edging tape on a profile to not only automatically and quickly attach an adhesive sheet to the side of a wooden panel, but also to stably prevent the lifting of the adhesive sheet that may occur at both ends of the wooden panel. The machine comprises adjustable pressing rollers constituting the pressing unit that are sequentially pressed after a set time when a wood panel is detected from a detection sensor provided on the side of the panel transfer unit, and is adhered at the end of the wood panel.

### Aim of the invention

The aim of the present invention is to provide an edging machine provide with a plurality of pressing device holder modules, independent of each other and comprising a respective pressing device, wherein said edging machine is designed to guarantee greater flexibility in terms of use compared to the edging machines of known type, due to the possibility of applying an edging tape on different door/jamb profiles, without the need to dismantle an entire sector (comprising a plurality of pressing devices) as necessary to replace it with a further sector provided with a further plurality of pressing devices because the pressing devices of the sector are not suitable for the profile of the door/jamb on which the edging tape is to applied.

A further aim of the present invention is to provide an edging machine provided with a respective moving unit for each pressing device (included in a respective pressing device holder module) with respect to the basement of the edging machine, so that each pressing device is moved in depth (i.e. along a first axis in a first direction and in a second direction, opposite to said first direction) and in height (i.e. along a second axis, perpendicular to said first axis, in a first direction and in a second direction, opposite to said first direction) independently of the other pressing devices.

Advantageously, the edging machine object of the invention allows to dismantle a single pressing device of a pressing device holder module, based on the profile of the door/jamb, without the need to dismantle the pressing device holder module in which said pressing device is included, nor the other pressing devices, so as to simplify the disassembly and assembly operations and reduce the times required for these operations.

A further advantage is given by the fact that the edging machine object of the invention allows the depth and height of a single pressing device to be adjusted, without the depth and/or height of the other pressing devices being modified.

### Object of the invention

It is therefore specific object of the present invention an edging machine as defined in claim 1.

Preferred embodiments are defined in the dependent claims.

### Attached figure list

The present invention will be now described, for illustrative, but not limitative purposes, according to its embodiments, making particular reference to the enclosed figures, wherein:
Figure 1 is a rear view of an edging machine for applying an edging tape on a profile of a door, according to the invention;
Figure 2 is a first perspective view of a profile of a door to be machined and of a part of the edging machine of Figure 1 to show a pressing system comprising a roller and a group of rollers, two hot air blowing devices, three pressing devices holder modules, each of which is provided with a respective pressing device adjustable in depth and height, a first group of rollers and a second group of rollers;
Figure 3 is a second perspective view of the part of the edging machine of Figure 2;
Figure 4A is a front perspective view of a first pressing device holder module comprising a first pressing device;
Figure 4B is a rear perspective view of the first pressing device holder module;
Figure 5A is a front perspective view of the first pressing device included in the first pressing device holder module;
Figure 5B is a rear perspective view of the first pressing device included in the first pressing device holder module;
Figure 6A is a front perspective view of a second pressing device holder module;
Figure 6B is a rear perspective view of the second pressing device holder module;
Figure 7A is a front perspective view of the second pressing device included in the second pressing device holder module;
Figure 7B is a rear perspective view of the second pressing device included in the second pressing device holder module;
Figure 8A is a front perspective view of a third pressing device holder module;
Figure 8B is a rear perspective of the third pressing device holder module;
Figure 9A is a front perspective view of the third pressing device included in the third pressing device holder module;
Figure 9B is a rear perspective view of the third pressing device;
Figure 10A is a front view of a first roller holder module comprising a first roller group;
Figure 10B is a rear view of the first roller holder module of Figure 10A;
Figure 11A is a front perspective view of the first roller group included in the first roller holder module of Figure 10A;
Figure 11B is a rear perspective view of the first roller group included in the first roller holder module of Figure 10A;
Figure 12A is a front perspective view of a second roller holder module comprising a second roller group;
Figure 12B is a rear perspective view of the second roller holder module of Figure 12A;
Figure 13A is a front perspective view of a second roller group included include in the second holder roller module of Figure 12A;
Figure 13B is a rear perspective view of the second roller group included in the second roller holder module of Figure 12A;
Figure 14 show a first pressing device holder module comprising a first pressing device, wherein said first pressing device exerts a pressure on a first portion of an edging tape applied on the profile of a door;
Figure 15 shows a second pressing device holder module comprising a second pressing device, wherein said second pressing device exerts a pressure on a second portion of the edging tape applied on the profile of a door;
Figure 16 shows a third pressing device holder module comprising a third pressing device, wherein said third pressing device exerts a pressure on a third portion of an edging tape applied on a profile of a door;
Figure 17 shows a roller of the first roller holder module, wherein said roller exerts a pressure on a portion of edging tape applied on the profile of a door;
Figure 18 shows a roller of the second roller holder module, wherein said roller exerts a pressure on a portion of the edging tape applied on the profile of a door;
Figure 19 is a first perspective view of a variant of the edging machine, wherein a pressing system of the edging machine comprises a further first roller group and a further second roller group, each of which serves to exert a respective pressure on an edging tape at a respective rounded portion of a door profile;
Figure 20 is a second perspective view of the edging machine of Figure 19;
Figure 21 is a perspective view of the further first roller group of the edging machine of Figure 19;
Figure 22 is a perspective view of the further second roller group of the edging machine of Figure 19;
Figure 23 shows a roller of said further first roller group which exerts a pressure on an edging tape at a first rounded portion of a profile of a door;
Figure 24 shows a roller of said further second roller group which exerts a pressure on the edging tape at a second rounded portion of a profile of a door.

### Detailed description of the invention

In the various Figures the similar parts will be indicated with the same numerical references.

With reference to the Figures an edging machine 1 for applying an edging tape N on a profile F of a door/jamb.

In the exemplary application, said profile F is the profile of a door.

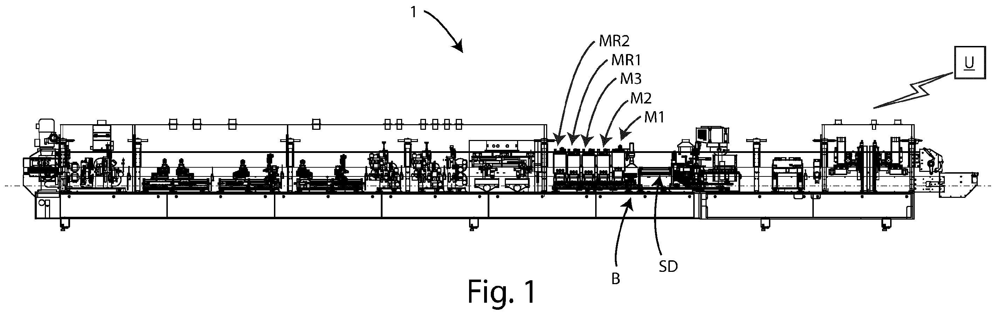

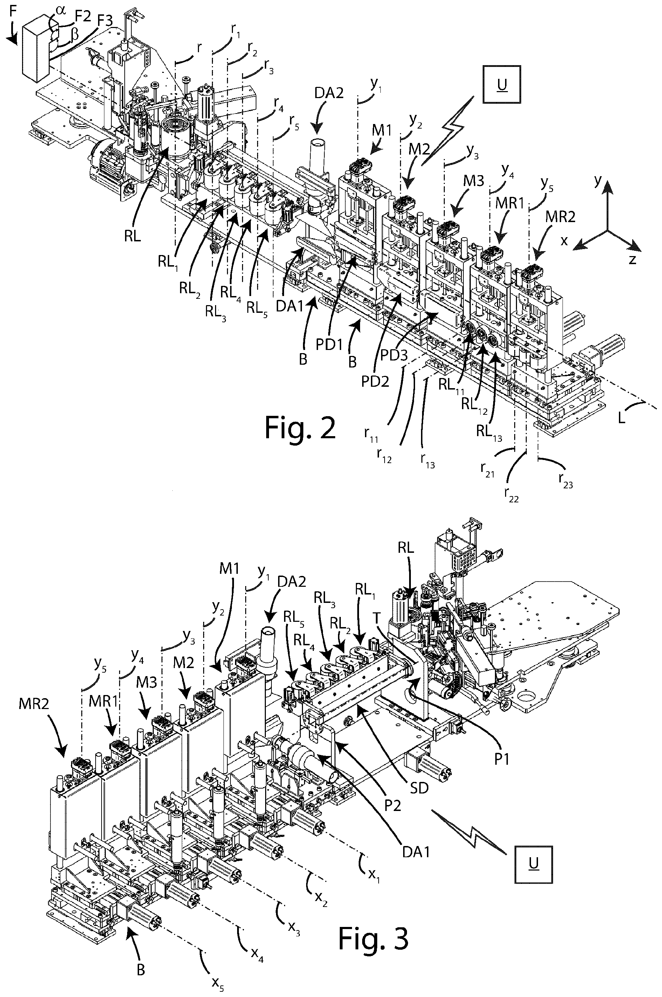

In Figures 1 and 2 the profile F is not shown to scale compared to the edging machine 1.

This profile F has been enlarged to show its faces.

Below, the term "profile" may be used to indicate the profile of a door.

In general, said profile F has three faces in cross section arranged in succession: a first face F1, a second face F2 and a third face F3.

Furthermore, such faces F1, F2, F3 are arranged in such a way as to form a first angle α between the first face F1 and the second face F2 and a second angle β between the second face F2 and the third face F3.

An edging machine 1 comprises a plurality of working stations, each of which can comprise one or more sub-stations.

For example, the edging machine 1 can comprise a finishing station comprising a plurality of substations, each of which is provided with a respective cutting system.

Each cutting system comprises an end trimming unit, a trimming unit, a chamfering unit, a rounding unit, one or more cutting units, one or more finishing units for the edging tape applied to the profile of a door, and an edge scraper unit.

The end trimming unit cuts the edging tape N which exceeds the length of the door profile.

The trimming unit removes an upper portion and/or a lower portion of the edging tape N which exceeds the thickness of the profile F.

The chamfering unit creates a connection between the edging tape N applied on the thickness of a profile F and the upper surface and/or a connection between the edging tape N applied on the thickness of the profile F and the lower surface of the profile F.

The rounding unit rounds the vertical portion of the edging tape N.

The cutting unit comprises a respective blade and a respective end trimming unit.

The finishing unit comprises a respective milling cutter for finishing the door profile.

Since after the machining carried out by the trimming unit, the chamfering unit and the rounding unit, the surface of the edging tape N is not a smooth surface, it is necessary to remove a plurality of surface irregularities, typically longitudinal, i.e. arranged along the length of the edging tape N.

The edge scraper unit serves to finish the upper end portion which defines the upper edge of the edging tape and/or the lower end portion which defines the lower edge of the edging tape by eliminating said surface irregularities on said end portions.

For this purpose, the edge scraper unit is provided with a cutting element.

The present patent application is directed to a bending station, in particular shown in Figures 2 and 3, to ensure that the edging tape N applied on the profile F of a door adheres to said profile F of a door.

This bending station is arranged upstream of the finishing station mentioned above.

In other words, with reference to a process for applying an edging tape N on the profile F of a door, this process comprises a first step in which an edging tape N is applied on the profile F of a door through the gluing station and a second step in which said edging tape N is finished by the finishing station.

This edging machine 1 develops along a longitudinal axis L and comprises:
- a basement B to allow said edging machine 1 to be placed on the ground,
- at least three pressing device holder modules M1, M2, M3 coupled with said basement B and arranged in succession along said longitudinal axis:
   a first pressing device holder module M1 comprising:
      a first pressing device PD1 for exerting a pressure on a first portion of said edging tape N in correspondence with at least one portion of said first face F1 of said profile F, and preferably in correspondence with at least a portion of said first face F1, with said first angle α and with a portion of said second face F2 of said profile F, and
      a first moving unit for moving said first pressing device PD1 in depth and height with respect to said pressing device holder module M1,
   a second pressing device holder module M2 comprising:
      a second pressing device PD2 for exerting a pressure on a second portion of said edging tape N in correspondence with at least one portion of said second face F2, and preferably in correspondence with at least a further portion of said second face F2, with said second angle β and with a portion of said third face F3 of said profile F,
      a second moving unit for moving said second pressure device PD2 in depth and height with respect to said second pressing device holder M2, and
   a third pressing device holder module M3 comprising:
      a third pressing device PD3 for exerting a pressure on a third portion of said edging tape N on at least one portion of said third face F3, and
      a third moving unit for moving said third pressing device PD3 in depth and height with respect to said third pressing device holder module M3.

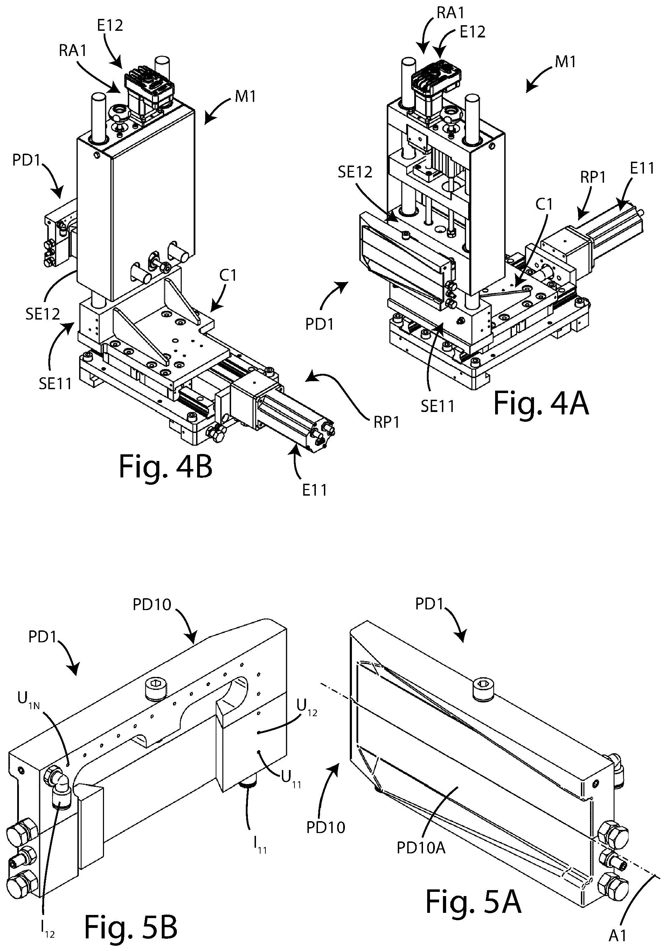

Figures 4A and 4B show the first pressing device holder module M1, and particularly the first moving unit for moving in depth and height the first pressing device PD1.

Said first moving unit comprises:
- a first moving device RP1 for moving in depth said first pressing device PD1 along a first axis x₁, perpendicular to said longitudinal axis **L,** in a first direction and in a second direction, opposite to said first direction, and
- a further first moving device RA1 for moving in height said first pressing device PD1 along a second axis y₁, different from said first axis x₁ and perpendicular to said longitudinal axis **L,** in a first direction and in a second direction, opposite to said first direction.

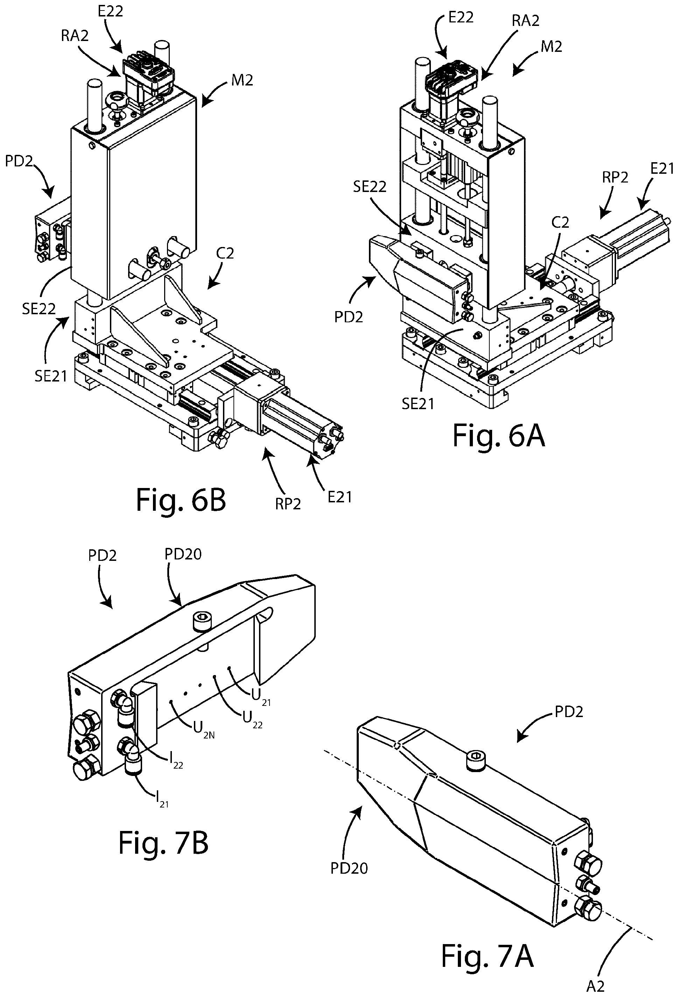

Figures 6A and 6B show the second pressing device holder module M2, and in particular the second moving unit for moving in depth and in height the second pressing device PD2.

Said second moving unit comprises:
- a second moving device RP2 for moving in depth said second pressing device PD2 along a first axis x₂, perpendicular to said longitudinal axis **L, in** a first direction and in a second direction, opposite to said first direction, and
- a further second moving device RA2 for moving in height said second pressing device PD2 along a second axis y₂, different from said first axis x₂ and perpendicular to said longitudinal axis **L,** in a first direction and in a second direction, opposite to said first direction,

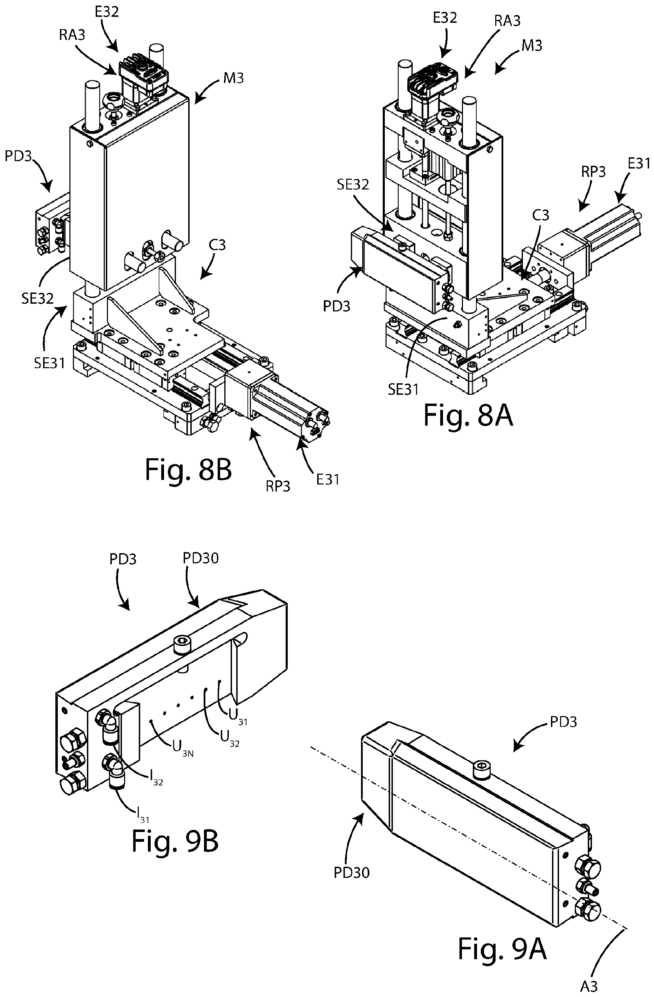

Figures 8A and 8B show the third pressing device holder module M3, and in particular the third moving unit for moving in depth and in height the third pressing device PD3.

Said third moving unit comprises:
- a third moving device RP3 for moving in depth said third pressing device PD3 along a first axis x₃, perpendicular to said longitudinal axis **L,** in a first **direction** and in a second direction, opposite to said first direction, and
- a further third moving device RA3 for moving in height said third pressing device PD3 along a second axis y₃, different from said first axis x₃ and perpendicular to said longitudinal axis L, in a first direction and in a second direction, opposite to said first direction.

Said first axes x₁, x₂, x₃ are parallel each other and said second axes y₁,y₂,y₃ are parallel each other.

In other words, each pressing device holder module M1, M2, M3 comprises a respective pressing device PD1, PD2, PD3 for exerting a pressure on a respective portion of said edging tape N and a respective moving unit for moving a respective pressing device PD1, PD2, PD3 along two respective axes with respect to the pressing device holder module M1, M2, M3 on which said pressing device PD1, PD2, PD3 is installed.

The movements of each pressing device PD1, PD2, PD3 along the two respective axes are independent of each other.

In the embodiment that is described, the edging machine 1 comprises a control logic unit U, shown in Figures 1, 2 and 3.

Said control logic unit is configured to:
∘ control the moving units independently of each other,
∘ with reference to the first moving unit, control said first moving device RP1 and said further first moving device RA1 independently of each other,
∘ with reference to the second moving unit, control said second pressing device RP2 and said further second moving device RA2 independently of each other, and
∘ with reference to the third moving unit, control said third moving device RP3 and said further third moving device RA3 independently of each other.

Consequently, each moving unit is configured for moving a respective pressing device PD1, PD2, PD3 in the space in such a way as to adjust the depth and height of said pressing device independently of each other based on the profile F of the door on which an edging tape N is applied.

Advantageously, the edging machine object of the invention offers the possibility of guaranteeing the adhesion of an edging tape N to different types of door profiles since the pressing devices PD1, PD2, PD3 mounted on the respective pressing device holder modules M1, M2, M3 are adjustable in depth and/or height with respect to the basement B of the edging machine 1.

Furthermore, each pressing device PD1, PD2, PD3 is couplable in a removable manner to a respective pressing .device holder module M1, M2, M3.

A further advantage is given by the fact that it is possible to remove a single pressing device based on the profile F of a door, without the need to remove the remaining pressing devices.

Consequently, based on the profile F of a door it is possible to easily remove one or more pressing devices and replace said pressing devices with further pressing devices.

If it is necessary to remove the three pressing devices to replace them with a further three pressing devices, this operation is simpler than dismantling a sector from a edging machine of known type to replace it with a further sector provided with pressing devices suitable for the profile F of a door.

In particular, each pressing device PD1, PD2, PD3 is coupled in a removable manner to a respective a pressing device holder module M1, M2, M3 through a respective supporting element.

In particular, each pressing device PD1, PD2, PD3 is coupled to the respective supporting element through a shape coupling.

Consequently, each pressing device PD1, PD2, PD3 can be manually coupled/uncoupled to/from the respective pressing device holder module M1, M2, M3 easily.

With reference to the first pressing device holder module M1, said first pressing device holder module M1 comprises:
- a first supporting element SE11 for supporting said first pressing device holder module M1,
   -- a further first supporting element SE12 for supporting said first pressing device PD1, wherein said first pressing device PD1 is coupled in a removable manner with said further first supporting element SE12.

Said first moving device RP1 comprises a first electric motor E11 connected to said first supporting element SE11 through a first slider C1, so that the movement of said first slider C1 in a first direction or in a second direction, opposite to said first direction, causes the movement of said first pressing device holder module M1 in the same direction, along said first axis X1.

Said further first moving device RA1 comprises a further first electric motor E12 connected to said further first supporting element SE12 through a first screw, preferably a worm screw (which can be a trapezoidal screw or a ball screw), so that the movement of said further first supporting element SE12 in a first direction or in a second direction, opposite to said first direction, causes the movement of said first pressing device PD1 in the same direction, along said second axis y₁.

With reference to the second pressing device holder module, said second pressing device holder module M2 comprises:
- a second supporting element SE21 for supporting said second pressing device holder module M2, and
- a further second supporting element SE22 for supporting said second pressing device PD2, wherein said second pressing device PD2 is coupled in a removable manner with said further second supporting element SE22.

Said second moving device RP2 comprises a second electric motor E21 connected to said second supporting element SE21 through a second slider C2, so that the movement of said second slider C2 in a first direction or in a second direction, opposite to said first direction, causes the movement of said second pressing device holder module M2 in the same direction, along said first axis x₂.

Said further second moving device RA2 comprises a further second electric motor E22 connected to said further second supporting element SE22 through a second screw, preferably a worm screw (which can be a trapezoidal screw or a ball screw), so that the movement of said further second supporting element SE22 in a first direction or in a second direction, opposite to said first direction, causes the movement of said second pressing device PD2 in the same direction, along said second axis y₂.

With reference to the third pressing device holder module M3, said third pressing device holder module M3 comprises:
- a third supporting element SE31 for supporting said third pressing device holder module M3, and
- a further third supporting element SE32 for supporting said third pressing device PD3, wherein said third pressing device PD3 is coupled in a removable manner with said further third supporting element SE32.

Said third moving device RP3 comprises a third electric motor E31 connected to said third supporting element E31 through a third slider C3, so that the movement of said third slider C3 in a first direction or in a second direction, opposite to said first direction, causes the movement of said third pressing device holder module M3 in the same direction, along said first axis X3.

Said further third moving device RA3 comprises a further third electric motor E32 connected to said further third supporting element SE32 through a third screw, preferably a worm screw (which can be a trapezoidal screw or a ball screw), so that the movement of said further third supporting element SE32 in a first direction or in a second direction, opposite to said first direction, causes the movement of said third pressing device PD3 in the same direction, along said second axis y₃.

The control logic unit U can be configured to send a respective control signal to the moving device and/or the further moving device of any moving unit, so that the respective pressing device moves along a respective first axis (in a first direction or second direction) and/or along a respective second axis (in a first direction or second direction) of a respective distance based on the respective control signal sent by the control logic unit U.

With reference to the pressing devices PD1, PD2, PD3 of the edging machine 1, each pressing device PD1, PD2, PD3 has a respective longitudinal axis A1, A2, A3 and a respective single axis of symmetry.

Said axis of symmetry coincides with said longitudinal axis.

The respective axis of symmetry divides each pressing device PD1, PD2, PD3 into two equal parts: a first part or upper part, and a second part or lower part.

Figures 5A and 5B show the first pressing device PD1.

Said first pressing device PD1 comprises a first body PD10 which extends along said longitudinal axis A1 from a first end to a second end and has a single axis of symmetry, in which said axis of symmetry coincides with said longitudinal axis A1.

Furthermore, said first body PD10 is provided with a groove PD10A which extends centrally around said longitudinal axis A1 from said first end to said second end.

Figures 7A and 7B show the second pressing device PD2.

Said second pressing device PD2 comprises a second body PD20 which extends along a longitudinal axis A2 from a first end to a second end and has a single axis of symmetry, in which said axis of symmetry coincides with said longitudinal axis A2.

Furthermore, said second body PD20 has, near said first end, a portion having a truncated pyramid shape with a rectangular base.

Figures 9A and 9B show the third pressing device PD3.

Said third pressing device PD3 comprises a third body PD30 which extends along a longitudinal axis A3 from a first end to a second end and has a single axis of symmetry, wherein said axis of symmetry coincides with said longitudinal axis A3.

Furthermore, said third body PD30 has, near said first end, a portion having a truncated pyramid shape with a rectangular base.

Furthermore, at least one pressing device between said first pressing device PD1, said second pressing device PD2 and said third pressing device PD3 can comprise a respective cavity (not shown), as well as one or more inlets for the passage of a refrigerant fluid , such as for example cold air, inside said cavity and one or more outlets for the exit of said refrigerant fluid from said pressing device.

In particular, the edging machine 1 comprises an air generator, i.e. a cold air generator.

In the embodiment that is described, each pressing device has a plurality of inlets and a plurality of outlets.

In particular, said first pressing device PD1 comprises a first inlet I₁₁ and a second inlet I₁₂ to allow the entry of a refrigerant fluid inside the first pressing device PD1 and a plurality of outlets U₁₁, U₁₂,... U_{1N}.

Said second pressing device PD2 comprises a first inlet I₂₁ and a second inlet I₂₂ to allow the entry of a refrigerant fluid inside the second pressing device PD2 and a plurality of outlets U₂₁, U₂₂,... U_{2N}.

Said third pressing device PD3 comprises a first inlet I₃₁ and a second inlet I₃₂ to allow the entry of a refrigerant fluid inside the third pressing device PD3 and a plurality of outlets U₃₁, U₃₂,... U_{3N}.

In a variant, at least a pressing device between said first pressing device PD1, said second pressing device PD2 and said third pressing device PD3 can comprise heating means for heating said at least one pressing device.

In a first example, said heating means can comprise a heating fluid, such as a hot air.

Said heating fluid enters one or more inlets of said at least one pressing device and exits from the respective outlets of said pressing device.

In said first example, the edging machine 1 comprises an air generator, i.e. a hot air generator.

In other words, the same inlets of at least one pressing device can be used to allow the passage of a quantity of cold air or hot air inside said pressing device and the same outlets allow said quantity of cold air or hot air to exit the pressing device, depending on the air generator in use.

In a second example, said heating means can comprise a resistor arranged inside said at least one pressing device.

In this specific case, said resistor is included in a heating circuit present inside said pressing device.

Said heating circuit comprises power supplying means for generating an electric current within said heating circuit.

Said power supplying means can be turned on and off manually or through the control logic unit U.

When an electric current flows through said resistor, said resistor heats up and in turn said resistor heats the pressing device.

In the embodiment that is described, said edging machine 1 can comprise a first roller group RL₁₁,RL₁₂,... RL_{1N} for exerting a pressure on said edging tape N, as shown in Figure 2.

Said first roller group RL₁₁,RL₁₂,... RL_{1N} is arranged in succession to said third pressing device holder module M3 and comprises a plurality of first rollers RL₁₁,RL₁₂,...RL_{1N}.

Each first roller RL₁₁,RL₁₂,... RL_{1N} of said first roller group RL₁₁,RL₁₂,... RL_{1N} has a respective first axis of rotation r₁₁,r₁₂,...r_{1N} perpendicular to said longitudinal axis L of the edging machine 1.

Said first axes of rotation r₁₁,r₁₂,...r_{1N} are parallel to each other.

In particular, said first roller group RL₁₁,RL₁₂,...RL_{1N} is included in a first roller holder module MR1.

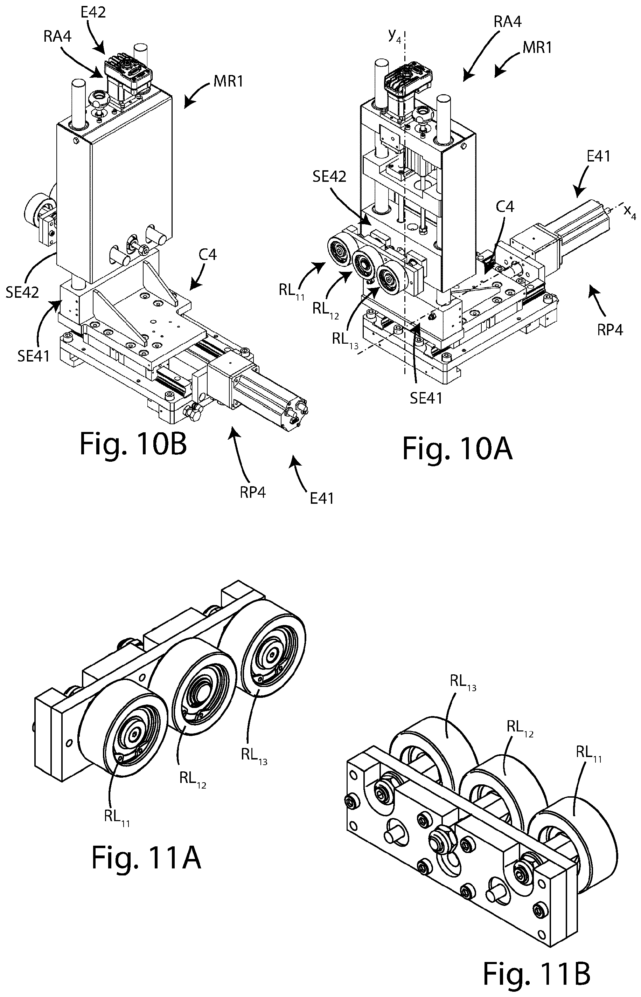

As shown in Figures 10A and 10B, said first roller holder module MR1 comprises a fourth moving unit for moving said first roller group RL₁₁, RL₁₂, RL₁₃ in depth and height with respect to said first roller holder group MR1.

Said fourth moving unit comprises:
- a fourth moving device RP4 for moving in depth said first roller group RL₁₁, RL₁₂, RL₁₃ along a first axis x₄, perpendicular to said longitudinal axis L, in a first direction and in a second direction, opposite to said first direction, and
- a further fourth moving device RA4 for moving in height said first roller group RL₁₁, RL₁₂, RL₁₃ along a second axis y₄, different from said first axis x₄ and perpendicular to said longitudinal axis L, in a first direction and in a second direction, opposite to said first direction.

Said first roller holder module MR1 comprises:
- a fourth supporting element SE41 for supporting said first roller holder module MR1, and
- a further fourth supporting element SE42 for supporting said first roller group RL₁₁, RL₁₂, RL₁₃.

Said fourth moving device RP4 comprises a fourth electric motor E14 connected to said fourth supporting element SE41 through a fourth slider C4, so that the movement of said fourth slider C4 in a first direction or in a second direction, opposite to said first direction, causes the movement of said first roller holder module MR1 in the same direction, along said first axis X4.

Said further fourth moving device RA4 comprises a further fourth electric motor E42 connected to said further fourth supporting element SE42 through a fourth screw, preferably a worm screw (which can be a trapezoidal screw or a ball screw), so that the movement of said further fourth supporting element SE42 in a first direction or in a second direction, opposite to said first direction, causes the movement of said first roller group RL₁₁, RL₁₂, RL₁₃ in the same direction, along said second axis y₄.

In the embodiment that is described, said first roller group comprises three rollers RL₁₁, RL₁₂, RL₁₃, each of which has a respective first axis of rotation r₁₁, r₁₂, r₁₃.

Furthermore, it is preferable that the edging machine 1 comprises a second roller group RL₂₁,RL₂₂,...RL_{2N} to exert a further pressure on said edging tape N, as shown in Figure 2.

Said second roller group RL₂₁,RL₂₂,...RL_{2N} is arranged in succession to said first roller group RL₁₁,RL₁₂,...RL_{1N} and comprises a plurality of second rollers RL₂₁,RL₂₂,...RL_{2N}.

Each second roller RL₂₁,RL₂₂,...RL_{2N} of said second roller group RL₂₁,RL₂₂,...RL_{2N} has a respective second axis of rotation r₂₁,r₂₂,...r_{2N} perpendicular to said longitudinal axis L of the edging machine 1 and to the first axis of rotation r₁₁ ,r₁₂,...r_{1N} of the first rollers RL₁₁,RL₁₂,...RL_{1N} of the first roller group RL₁₁,RL₁₂,...RL_{1N}.

Said second axis of rotation r₂₁,r₂₂,...r_{2N} are parallel to each other.

In particular, said second roller group RL₂₁,RL₂₂,...RL_{2N} is included in a second roller holder module.

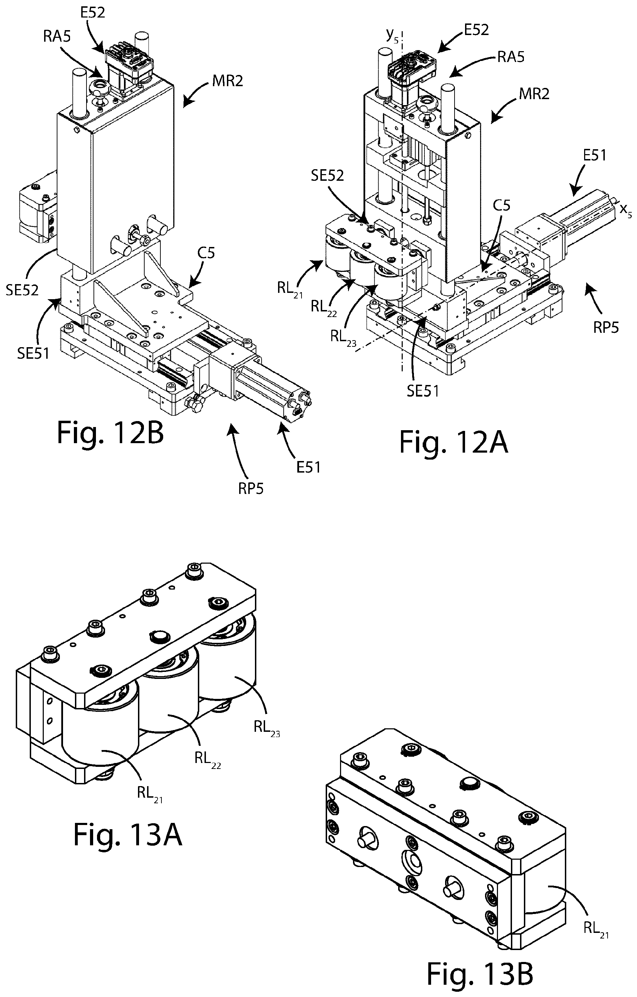

As shown in Figures 12A and 12B, said second roller holder module MR2 comprises a fifth moving unit for moving said second roller group RL₂₁, RL₂₂, RL₂₃ in depth and in height with respect to said second roller holder module MR2.

Said fifth moving unit comprises:
- a fifth moving device RP5 for moving in depth said second roller group RL₂₁, RL₂₂, RL₂₃ along a first axis e xs, perpendicular to said longitudinal axis L, in a first direction and in a second direction, opposite to said first direction, and
- a further fifth moving device RA5 for moving in height said second roller group RL₂₁, RL₂₂, RL₂₃ along a second axis y₅, different from said first axis xs and perpendicular to said longitudinal axis L, in a first direction and in a second direction, opposite to said first direction.

Said second roller holder module MR2 comprises:
- a fifth supporting element SE51 for supporting said second roller holder module MR2, and
- a further fifth supporting element SE52 for supporting said second roller group RL₂₁, RL₂₂, RL₂₃.

Said fifth moving device RP5 comprises a fifth electric motor E51 connected to said fifth supporting element SE51 through a fifth slider C5, so that the movement of said fifth slider C5 in a first direction or in a second direction, opposite to said first direction, causes the movement of said second roller holder module MR2 in the same direction, along said first axis x₅.

Said further moving device RA5 comprises a further fifth electric motor E52 connected to said further fifth supporting element SE52 through a fifth screw, preferably a worm screw (which can be a trapezoidal screw or a ball screw), so that the movement of said further fifth supporting element SE52 in a first direction or in a second direction, opposite to said first direction, causes the movement of said second roller group RL₂₁, RL₂₂, RL₂₃ in the same direction, along said second axis ys.

In the embodiment that is described, said first roller group comprises three second rollers RL₂₁, RL₂₂, RL₂₃, each of which has a respective second axis of rotation r₂₁, r₂₂, r₂₃.

The control logic unit can be configured to send a respective control signal to the moving device and/or to the further moving device of the fourth moving unit and/or of the fifth moving unit, so that the respective roller group moves along a respective first axis (in a first direction or in a second direction) and/or along a respective second axis (in a first direction or in a second direction) of a respective distance based on the respective control signal sent from the control logic unit U.

The edging machine 1 can comprise a pressing system along said longitudinal axis L before of the first pressing device holder module M1.

Said pressing system can comprise a roller RL having an axis of rotation r perpendicular to the longitudinal axis L of the edging machine.

Said roller RL is intended to contact said profile F and to exert a pressure on the edging tape N so that said edging tape N is applied on said profile F.

It is preferable that said pressing system further comprises a roller group RL₁,RL₂,...RL_{N} to exert a further pressure on said edging tape N.

Said roller group RL₁,RL₂....RL_{N} is arranged in succession to said roller RL and comprises a plurality of rollers RL₁,RL₂,.. RL_{N}.

Each roller RL₁,RL₂,...RL_{N} of said plurality of rollers RL₁,RL₂,...RL_{N} has a respective axis of rotation r₁,r₂,...r_{N} parallel to said axis of rotation r of said roller R.

In particular, said edging machine 1 can comprise a supporting device SD for supporting said roller group RL₁,RL₂,...RL_{N} and said supporting device SD is arranged between a first wall P1 and a second wall P2 of said edging machine 1 and is connected to said two walls P1, P2 in such a way as to rotate around a axis of rotation T parallel to the longitudinal axis L of the edging machine 1.

Said first wall P1 and said second wall P2 are parallel to each other.

The rotation of said supporting device SD causes the rotation of said roller group RL₁,RL₂,...RL_{N}.

The rotation of said supporting device SD can be manual or motorized (in the latter case an electric motor is connected to the supporting device SD and the control logic unit U can be configured to control said electric motor to rotate the supporting device SD).

Advantageously, the rotation of said roller group RL₁,RL₂,...RL_{N} allow to exert a pressure on an edging tape N applied on a profile F of a door, when said profile F has one or more inclined faces, for example when the first face F1 forms with the second face F2 a first angle α less than 90°.

In the embodiment that is described, said roller group comprises five rollers RL₁, RL₂, RL₃, RL₄, RL₅, each of which has a respective axis of rotation r₁, r₂, r₃, r₄, r₅.

Furthermore, said edging machine 1 can comprise at least one first hot air blowing device DA1 for blowing a jet of hot air on the edging tape N applied on the profile F of a door.

Said first hot air blowing device DA1 is arranged between said pressing system and said first pressing device holder module M1.

The quantity of glue with which the edging tape N is applied to the profile F of a door can cool over time.

A jet of hot air on the edging tape N applied on the profile F of the door increases the temperature of the quantity of glue, so that this quantity of glue is still able to carry out its function and the edging tape can adhere correctly to said profile F of said door when it is subjected to a pressure exerted by the pressing devices PD1, PD2, PD3.

In the embodiment that is described, said edging machine 1 comprises a second hot air blowing device DA2 for blowing a jet of hot air on the edging tape N applied on the profile F of a jamb.

Said second hot air blowing device DA2 is arranged between said pressing system and said first pressing device holder module M1.

In particular, said second hot air blowing device DA2 faces said first hot air blowing device DA1.

A jet of hot air on the edging tape N applied to the profile of a jamb increases the temperature of the quantity of glue, so that this quantity of glue is still able to perform its function and the edging tape can adhere correctly to said profile of said jamb when it is subjected to pressure exerted by the pressing devices PD1, PD2, PD3.

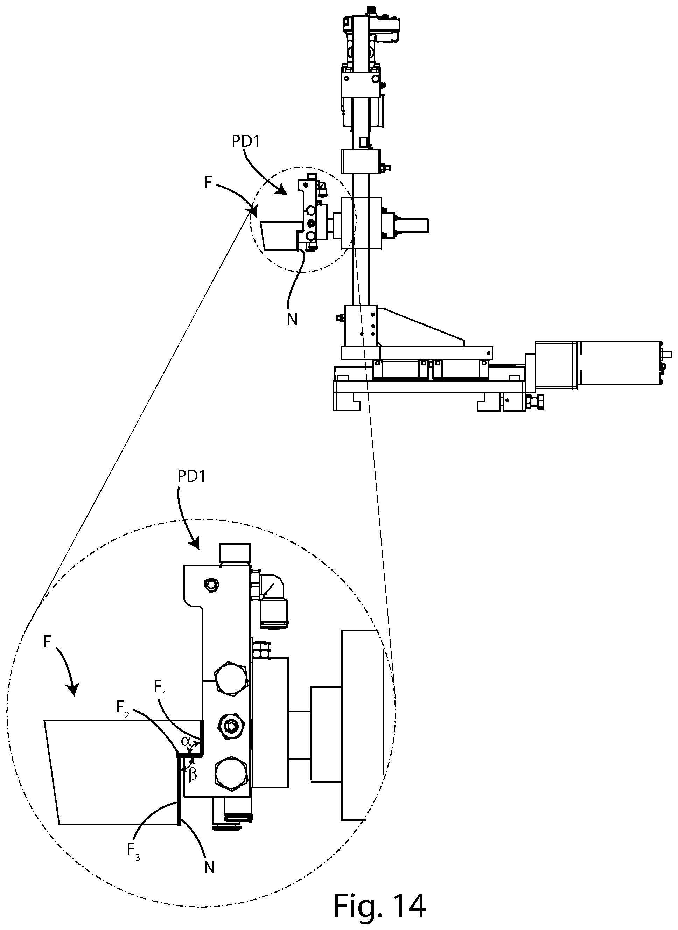

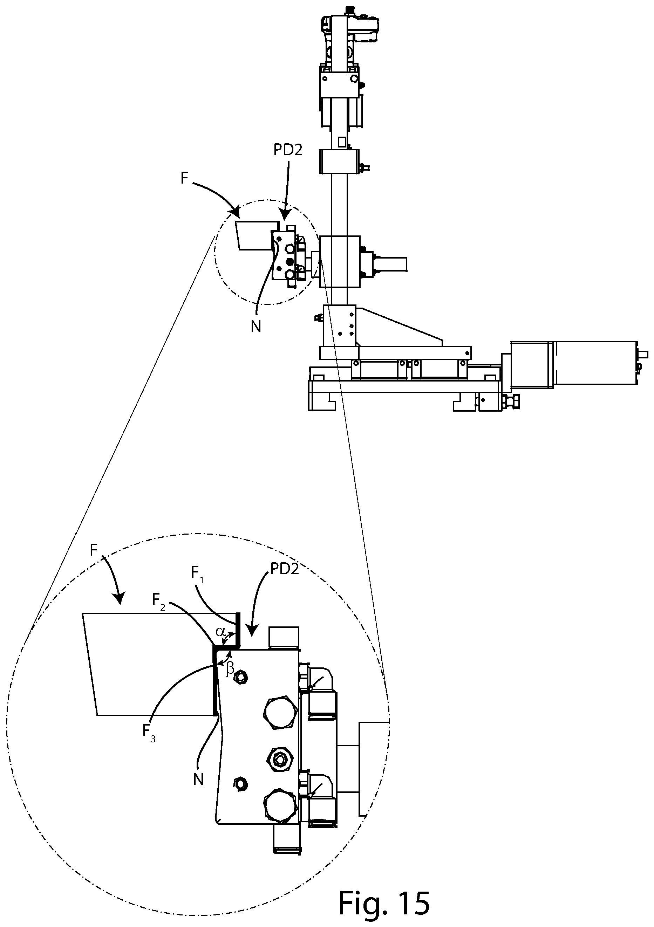

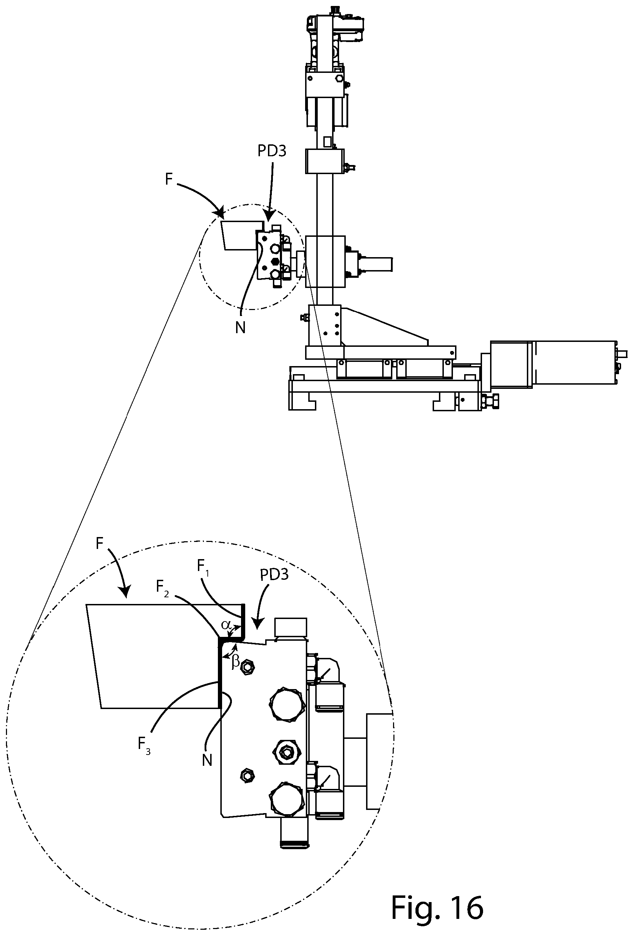

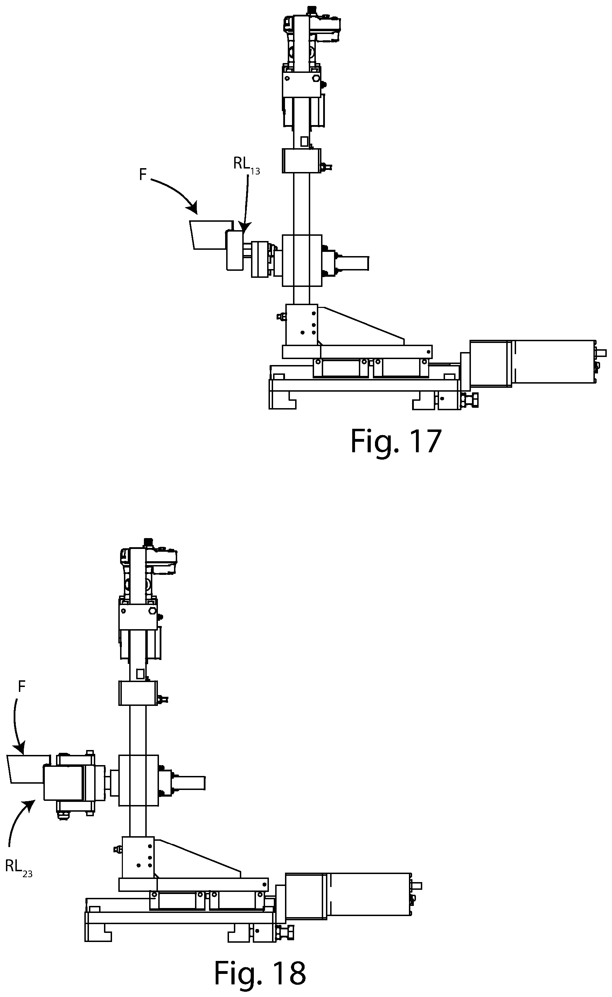

Figures 14 to 18 schematically show the edging tape applied on the profile F of a door which undergoes a pressure first from the first pressing device (Figure 14), then from the second pressing device (Figure 15), finally from the third pressing device pressing (Figure 16), and subsequently by the first roller group (Figure 17) and by the second roller group (Figure 18).

Figure 14 shows a first portion of an edging tape N which receives a pressure exerted by the first pressing device PD1 so that said first portion adheres in particular to the first face F1 of the profile F, to the first angle α and to a portion of the second face F2.

The first pressing device PD1 can be used for exerting a pressure on a profile of a jamb.

This is due to the symmetrical shape of the body PD10 of the first pressing device PD1.

Differently from what is shown in Figure 14, in which a first face of the profile F of a door contacts a first portion (or lower portion) of the groove PD10A of the first pressing device PD1 and a first edge (or lower edge) of said first device pressing device PD1, a first face of the profile of a jamb will contact a second portion (or upper portion) of the groove PD10A and a second edge (or upper edge) of the first pressing device PD1.

Figure 15 shows a second portion of an edging tape N which receives a pressure exerted by the second pressing device PD2 so that said second portion adheres in particular to a further portion of the second face F2 of the profile F, to a second angle β and to a portion of the third face F3 of the profile F.

The second pressing device PD2 can be used for exerting a pressure on a profile of a jamb.

This is due to the symmetrical shape of the body PD10 of the second pressing device PD2.

Differently from what is shown in Figure 15, in which a second face F2 of the profile F of a door substantially contacts a first portion (or upper portion) of a first edge (or upper edge), a second face of the profile of a jamb will contact a second portion (or lower portion) of a second edge (or lower edge) of the second pressing device PD2.

Figure 16 shows a third portion of an edging tape N which receives a pressure exerted by the third pressing device PD3 so that said third portion adheres in particular to a further portion of the third face F3 of the profile F.

The third pressing device PD3 can be also used for exerting a pressure on a profile of a jamb.

This is due to the symmetrical shape of the body PD30 of the third pressing device PD3.

Differently from what is shown in Figure 16, in which a third face F3 of the profile F of a door substantially contacts a first portion (or upper portion) of the central part of the body PD30 of the third pressing device PD3, a third face of the profile of a jamb will contact a second portion (or lower portion) of the central part of the body PD30 of the third pressing device PD3.

Figures 17 and 18 show respectively the profile F of a door on which the edging tape N is applied when a pressure is exerted by the first group of rollers RL₁₁,RL₁₂,...RL_{1N}, included in the first roller holder module MR1, and when a pressure is exerted by a second roller group RL₂₁,RL₂₂,...RL_{2N}, included in the first roller holder module MR1.

The pressure exerted by the first roller group and the second roller group improves the adhesion of the edging tape N on the profile F of a door.

In particular, by means of the first roller group RL₁₁,RL₁₂,...RL_{1N} it is possible to exert pressure on the edging tape N against the second face F2 of the profile F of a door, and by means of the second roller group RL₂₁,RL₂₂,...RL_{2N} it is possible to exert pressure on the edging tape N against at least the third face F3 of the profile F of a door.

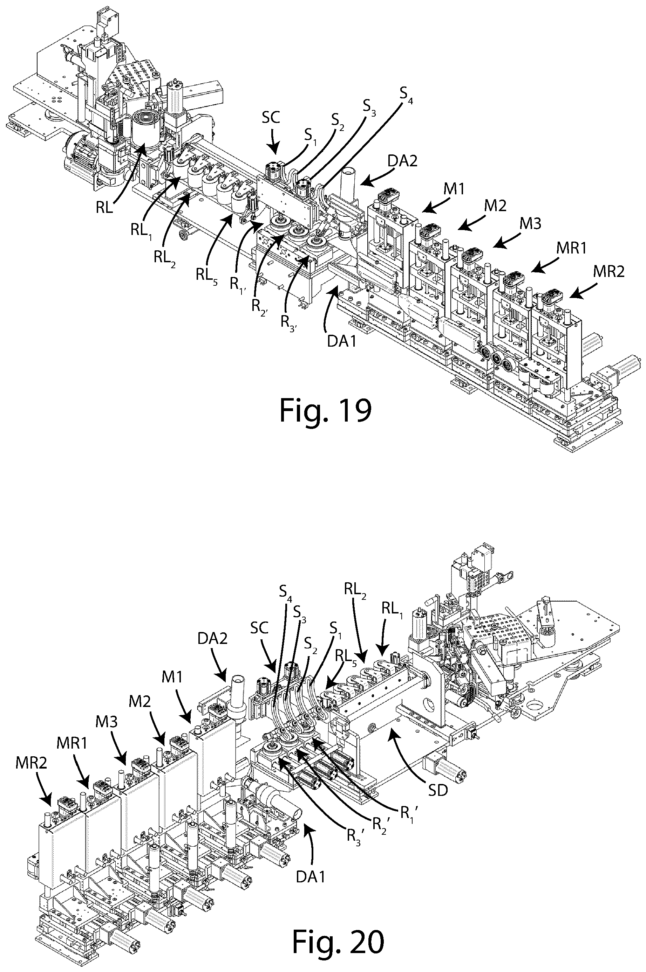

Figures 19 and 20 show a variant of the edging machine.

In this variant, differently from the embodiment described above, the pressing system comprises at least a further first roller group R₁',R₂',...R_{N}' to exert pressure on a portion of the edging tape N at a first rounded portion of the profile F.

Said further first roller group comprises a plurality of rollers R₁^{'}, R₂^{'},...R_{N}^{'} and each roller of said plurality of rollers has a respective axis of rotation r₁^{'},r₂^{'},...r_{N}^{'}, perpendicular to the longitudinal axis L of the edging machine 1 and parallel to the axis of rotation RL of the roller or to the axis of rotation of the rollers RL₁,RL₂,...RL_{N} of the roller group RL₁,RL₂,...RL_{N}.

With reference to Figures 19 and 20, each roller R₁^{'},R₂^{'},...R_{N}^{'} of said further first roller group R₁^{'},R₂^{'},...R_{N}^{'} can be moved in depth along a respective first axis (parallel to the first axes x₁, x₂, x₃ mentioned above) through a respective pneumatic actuator (not shown), arranged inside a respective container V₁,V₂,...V_{N}.

In the embodiment that is described, said container V₁,V₂,...V_{N} has a cylindrical shape.

In other words, each pneumatic actuator is connected to a respective roller R₁^{'},R₂^{'},...R_{N}^{'} of said further first roller group R₁^{'},R₂^{'},...R_{N}^{'}.

In the embodiment that is described, said further first roller group comprises three rollers R₁^{'},R₂^{'},R₃^{'}.

Each roller R₁^{'},R₂^{'},R₃' has a respective axis of rotation r₁^{'},r₂^{'},...r₃^{'}.

The respective first axis along which each roller can be moved in depth is x₆, x₇, x₈.

As shown in Figure 19 and 20, it is preferable that said pressing system comprises a further second roller group R₁^{"},R₂^{"},...R_{N}^{"} to exert a pressure on a portion of the edging tape N at a second rounded portion of the profile F (different from the first portion rounded mentioned above).

Said further second roller group is arranged inside a sector SC included in said edging machine 1, wherein said sector SC is provided with a plurality of slots S₁,S₂,...S_{N}.

In particular, said further second roller group comprises a plurality of rollers R₁^{"},R₂^{"},...R_{N}^{"} and each roller of said plurality of rollers R₁^{"},R₂^{"},...R_{N}^{"} has a respective axis of rotation r₁^{"},r₂^{"},...r_{N}^{"} and is included in a respective roller holder device PR₁^{"},PR₂^{"},...PR_{N}^{"}.

Each roller holder device PR₁^{"},PR₂^{"},...PR_{N}^{"} is slidably coupled to a respective slot S₁,S₂,...S_{N} of said sector SC, so as to slide inside a respective slot S₁,S₂,...S_{N} up to a desired position, and is provided with respective blocking means to be locked in said desired position along said slot S₁,S₂,...S_{N}.

When a desired position is reached, the roller holder device is blocked in said desired position, so that the respective axis of rotation has a certain inclination with respect to the longitudinal axis L of the edging machine 1.

In an example, said blocking means can comprise a respective screw SV₁,SV₂,...SV_{N}.

Each slot has an elongated and curvilinear shape.

In the example that is described, said further second roller group comprises four rollers R₁^{"}, R₂^{"}, R₃^{"}, R₄^{"} capable of rotating around a respective axis of rotation r₁^{"}, r₂^{"}, r₃^{"}, r₄^{"} and is included in a respective roller holder device PR₁^{"}, PR₂^{"}, PR₃^{"}, PR₄^{"}.

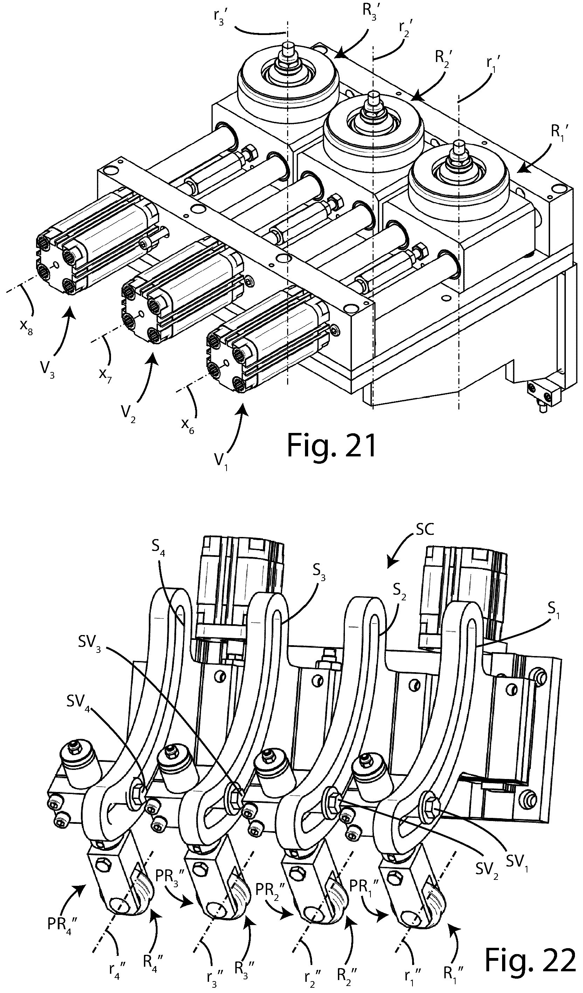

Figures 21 and 22 show in detail the further first roller group R₁^{'},R₂^{'},R₃^{'} and the further second roller group R₁^{"}, R₂^{"}, R₃^{"}, R₄^{"} respectively.

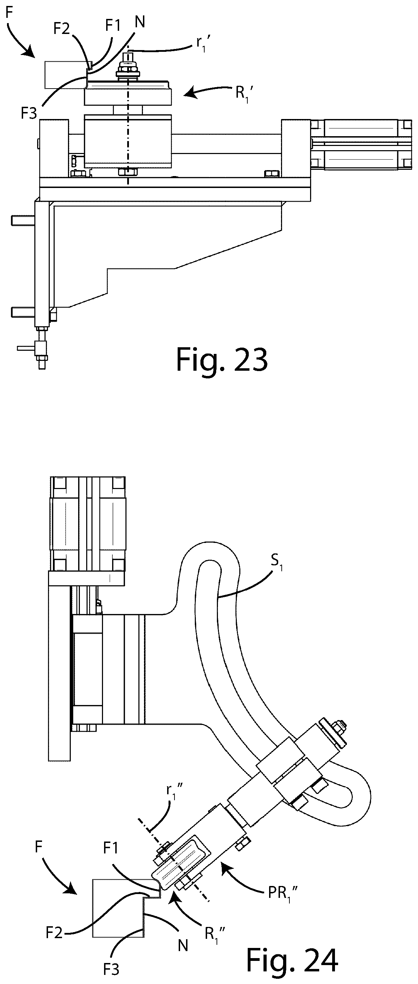

Figure 23 show a roller R₁^{'} of said further first roller group R₁^{'},R₂^{'},R₃^{'} which exerts a pressure on the edging tape N at a first rounded portion F of a door.

In the example that is described, said first rounded portion is an end portion of the third face F3 of said profile F.

Figure 24 show a roller R₁^{"} of said further second roller group R₁^{"},R₂^{"}, R₃,^{"}R₄^{"} which exerts a pressure on the edging tape N at a second rounded portion of a profile F of a door.

In the example that is described, said second rounded portion is an end portion of the first face F1 of said profile F.

Said roller R₁^{"} of said further second roller group R₁^{"},R₂^{"}, R₃,^{"}R₄^{"} is blocked on the respective slot S₁ at an end portion of said slot S₁.

The position of said roller R₁" with respect to the slot S₁ determines the inclination of its axis of rotation r₁^{"} with respect to the longitudinal axis L of the edging machine 1.

Furthermore, each roller of said further second roller group R1",R2",R3,"R4" can have a shaped form based on the rounded portion of the profile F.

In the variant that is described, the edging machine 1 comprises both said further first roller group and said further second roller group. However, it is not necessary that both said further roller groups are both present.

For example, the edging machine could comprise only the further first roller group or only the further second roller group, without departing from the scope of the invention.

Advantageously, since the presence of said further first roller group and/or the presence of said further second roller groups allows pressure to be exerted on an edging tape at a respective rounded portion of a profile F of a door, the edging machine 1 can be used for a greater number of door/jamb profiles, so as to be more flexible in terms of use compared to edging machines of known type.

### Advantages

Advantageously, the edging machine 1 object of the invention allows the application of an edging tape N not only on different profiles of a door but also on different profiles of a jamb.

In particular, the edging machine 1 object of the invention allows to replace a single pressing device of a pressing device holder module based on the profile of a door/jamb, without the need to dismantle the respective pressing device holder module, nor the other pressing devices of the edging machine.

Compared to a known type of edging machine in which it is necessary for an entire sector (having a plurality of pressing devices) to be dismantled from the edging machine itself to be replaced with a further sector (having a further plurality of pressing devices suitable for the profile of a door/jamb), through the edging machine 1 object of the invention the disassembly and assembly operations are reduced to a minimum since it is sufficient to dismantle one or more pressing devices based on the profile of the door/jamb.

The structure of the edging machine object of the invention is designed to allow even a single pressing device to be dismantled to replace it with a further pressing device.

Therefore it is not necessary to dismantle either the pressing device holder module whose pressing device is to be replaced, nor the remaining pressing devices of the edging machine.

Since it is not always necessary to dismantle the three pressing devices, dismantle a pressing device (which is removably coupled to the respective pressing device holder module via a coupling element) from the respective pressing device holder module and mount an additional pressing device are simpler operations than dismantling a sector from a known type of edging machine and assembling a further sector.

Furthermore, the time necessary to dismantle a single pressing device is less than the time necessary to dismantle an entire sector of a known type of edging machine, just as the time to mount just one additional pressing device is less than the time to mount a further sector for an edging machine of known type.

Furthermore, the possibility of adjusting the depth and height of the individual pressing devices of the edging machine independently of each other increases the number of types of door/jamb profiles that can be machined by said edging machine.

The present invention has been described for illustrative, but not limitative purposes, according to its preferred embodiments, but it is to be understood that variations and/or modifications can be carried out by a skilled in the art, without departing from the scope thereof, as defined according to enclosed claims.

## Claims

1. Edging machine (1) for applying an edging tape (N) on a profile (F) of a door/jamb, wherein said profile (F) has a first face (F1), a second face (F2) and a third face (F3), wherein said edging machine (1) has a longitudinal axis (L) and comprises:
- a basement (B),
- at least three pressing device holder modules (M1,M2,M3) arranged in succession along said longitudinal axis (L) and coupled with said basement (B):
a first pressing device holder module (M1) comprising:
a first pressing device (PD1) for exerting a pressure on a first portion of said edging tape (N) on at least one portion of said first face (F1), and
a first moving unit (RP1,RA1) for moving said first pressing device (PD1) in depth and height with respect to said basement (B),
a second pressing device holder module (M2) comprising:
a second pressing device (PD2) for exerting a pressure on a second portion of said edging tape (N) on at least one portion of said second face (F2),
a second moving unit (RP2,RA2) for moving said second pressure device (PD2) in depth and height with respect to said basement (B), a third pressing device holder module (M3) comprising:
a third pressing device (PD3) for exerting a pressure on a third portion of said edging tape (N) on at least one portion of said third face (F3), and
a third moving unit (RP3,RA3) for moving said third pressing device (PD3) in depth and height with respect to said basement (B).

2. Edging machine (1) according to claim 1, wherein
said first moving unit (RP1,RA1) comprises a first moving device (RP1) for moving in depth said first pressing device (PD1) along a first axis x₁, perpendicular to said longitudinal axis (L), in a first direction and in a second direction, opposite to said first direction, and
a further first moving device (RA1) for moving in height said first pressing device (PD1) along a second axis y₁, different from said first axis x₁ and perpendicular to said longitudinal axis (L), in a first direction and in a second direction, opposite to said first direction,
wherein
said second moving unit (RP2,RA2) comprises:
a second moving device (RP2) for moving in depth said second pressing device (PD2) along a first axis x₂, perpendicular to said longitudinal axis (L), in a first direction and in a second direction, opposite to said first direction, and
a further second moving device (RA2) for moving in height said second pressing device (PD2) along a second axis y₂, different from said first axis x₂ and perpendicular to said longitudinal axis (L), in a first direction and in a second direction, opposite to said first direction,
wherein
said third moving unit (RP3,RA3) comprises:
a third moving device (RP3) for moving in depth said third pressing device (PD3) along a first axis x₃, perpendicular to said longitudinal axis (L), in a first direction and in a second direction, opposite to said first direction, and
a further third moving device (RA3) for moving in height said third pressing device (PD3) along a second axis y₃, different from said first axis x₃ and perpendicular to said longitudinal axis (L), in a first direction and in a second direction, opposite to said first direction,
wherein
said first axes x₁, x₂, x₃ are parallel each other and said second axes y₁,y₂,y₃ are parallel each other.

3. **Edging** machine (1) according to the preceding claim, wherein said edging machine (1) comprises:
a control logic unit (U) configured to:
∘ control the moving units (RP1,RA1; RP2,RA2; RP3,RA3) independently of each other,
∘ with reference to the first moving unit (RP1,RA1), control said first moving device (RP1) and said further first moving device (RA1) independently of each other,
∘ with reference to the second moving unit (RP2,RA2), control said second pressing device (RP2) and said further second moving device (RA2) independently of each other, and
∘ with reference to the third moving unit (RP3,RA3), control said third moving device (RP3) and said further third moving device (RA3) independently of each other.

4. Edging machine (1) according to the preceding claim, wherein
said first pressing device holder module (M1) comprises:
- a first supporting element (SE11) for supporting said first pressing device holder module (M1),
-- a further first supporting element (SE12) for supporting said first pressing device (PD1), wherein said first pressing device (PD1) is coupled in a removable manner with said further first supporting element (SE12), and said first moving device (RP1) comprises a first electric motor (E11) connected to said first supporting element (SE11) through a first slider (C1), so that the movement of said first slider (C1) in a first direction or in a second direction, opposite to said first direction, causes the movement of said first pressing device holder module (M1) in the same direction, along said first axis x₁, and
said further first moving device (RA1) comprises a further first electric motor (E12) connected to said further first supporting element (SE12) through a first screw, so that the movement of said further first supporting element (SE12) in a first direction or in a second direction, opposite to said first direction, causes the movement of said first pressing device (PD1) in the same direction, along said second axis y₁,
wherein
said second pressing device holder module (M2) comprises:
- a second supporting element (SE21) for supporting said second pressing device holder module (M2),
- a further second supporting element (SE22) for supporting said second pressing device (PD2), wherein said second pressing device (PD2) is coupled in a removable manner with said further second supporting element (SE22),
said second moving device (RP2) comprises a second electric motor (E21) connected to said second supporting element (SE21) through a second slider (C2), so that the movement of said second slider (C2) in a first direction or in a second direction, opposite to said first direction, causes the movement of said second pressing device holder module (M2) in the same direction, along said first axis x₂,
said further second moving device (RA2) comprises a further second electric motor (E22) connected to said further second supporting element (SE22) through a second screw, so that the movement of said further second supporting element (SE22) in a first direction or in a second direction, opposite to said first direction, causes the movement of said second pressing device (PD2) in the same direction, along said second axis y₂,
wherein
said third pressing device holder module (M3) comprises:
- a third supporting element (SE31) for supporting said third pressing device holder module (M3), and
- a further third supporting element (SE32) for supporting said third pressing device (PD3), wherein said third pressing device (PD3) is coupled in a removable manner with said further third supporting element (SE32),
said third moving device (RP3) comprises a third electric motor (E31) connected to said third supporting element (SE31) through a third slider (C3), so that the movement of said third slider (C3) in a first direction or in a second direction, opposite to said first direction, causes the movement of said third pressing device holder module (M3) in the same direction, along said first axis x₃, and
said further third moving device (RA3) comprises a further third electric motor (E32) connected to said further third supporting element (SE32) through a third screw, so that the movement of said further third supporting element (SE32) in a first direction or in a second direction, opposite to said first direction, causes the movement of said third pressing device (PD3) in the same direction, along said second axis y₃.

5. Edging machine (1) according to any one of the preceding claims, wherein
said first pressing device (PD1) comprises a first body (PD10) extending along a longitudinal axis (A1) from a first end to a second end and has a single axis of symmetry, wherein said axis of symmetry coincides with said longitudinal axis (A1) of said first pressing device (PD1), and
wherein
said first body (PD10) is provided with a groove (G) extending centrally around said longitudinal axis (A1) from said first end to said second end.

6. Edging machine (1) according to any one of the preceding claims, wherein
said second pressing device (PD2) comprises a second body (PD20) extending along a longitudinal axis (A2) from an end to a second end and has a single axis of symmetry, wherein said axis of symmetry coincides with said longitudinal axis (A2) of said second pressing device (PD2),
wherein
said second body (PD20) has in proximity of said first end a portion having a truncated pyramid shape with a rectangular base.

7. Edging machine (1) according to any one of the preceding claims, wherein
said third pressing device (PD3) comprises a third body (PD30) extending along a longitudinal axis (A3) from a first end to a second end and has a single axis of symmetry, wherein said axis of symmetry coincides with said longitudinal axis (A3) of said third pressing device (PD3), and
wherein
said third body (PD30) has in proximity of said first end a portion having a truncated pyramid shape with a rectangular base.

8. Edging machine (1) according to any one of the preceding claims, wherein
at least one pressing device between said first pressing device (PD1), said second pressing device (PD2) and said third pressing device (PD3) comprises a respective cavity, as well as one or more respective inlets (I₁₁,I₁₂,...I_{1N}; I₂₁,I₂₂,...I_{2N}; I₃₁,I₃₂,...I_{3N}) for the passage of a refrigerant fluid inside said cavity and one or more respective outlets (U₁₁,U₁₂,...U_{1N}; U₂₁,U₂₂,...U_{2N}; U₃₁,U₃₂,...U_{3N}) for outputting said refrigerant fluid from said pressing device.

9. Edging machine (1) according to any one of the preceding claims, wherein at least one pressing device between said first pressing device (PD1), said second pressing device (PD2) and said third pressing device (PD3) comprises heating means for heating said at least one pressing device.

10. Edging machine according to claim 9, wherein said at least one pressing device comprises a respective cavity, as well as one or more respective inlets (I₁₁,I₁₂,...I_{1N}; I₂₁,I₂₂,...I_{2N}; I₃₁,I₃₂,...I_{3N}) and one or more respective outlets (U₁₁,U₁₂,.. U_{1N}; U₂₁,U₂₂,...U_{2N}; U₃₁,U₃₂,...U_{3N}), and said heating means comprises a heating fluid, so that said heating fluid enters said one or more inlets (I₁₁,I₁₂,...I_{1N}; I₂₁,I₂₂,...I_{2N}; I₃₁,I₃₂,...I_{3N}) and exits from said one or more outlets (U₁₁,U₁₂,...U_{1N}; U₂₁,U₂₂,...U_{2N}; U₃₁,U₃₂,...U_{3N}).

11. Edging machine according to claim 9, wherein said heating means comprise at least one resistor arranged inside said at least one pressing device.

12. Edging machine (1) according to any one of the preceding claims, wherein said edging machine (1) comprises a first roller group (RL₁₁,RL₁₂,...RL_{1N}) for exerting a pressure on said edging tape (N), wherein said first roller group (RL₁₁,RL₁₂,...RL_{1N}) is arranged in succession to said third pressing device holder module (PD3) and comprises a plurality of first rollers (RL₁₁,RL₁₂,...RL_{1N}), wherein each first roller (RL₁₁,RL₁₂,...RL_{1N}) of said first roller group (RL₁₁,RL₁₂,...RL_{1N}) has a respective first axis of rotation (r₁₁,r₁₂,...r_{1N}) perpendicular to said longitudinal axis (L).

13. Edging machine (1) according to the preceding claim, wherein said edging machine (1) comprises a second roller group (RL₂₁,RL₂₂,...RL_{2N}) for exerting a further pressure on said edging tape (N), wherein said second roller group (RL₂₁,RL₂₂,...RL_{2N}) is arranged in succession to said first roller group (RL₁₁,RL₁₂,...RL_{1N}) and comprises a plurality of second rollers (RL₂₁,RL₂₂,...RL_{2N}), wherein each second roller (RL₂₁,RL₂₂,...RL_{2N}) of said second roller group (RL₂₁,RL₂₂,...RL_{2N}) has a respective second axis of rotation (r₂₁,r₂₂,...r_{2N}) perpendicular to said longitudinal axis (L) and to said first axis of rotation (r₁₁,r₁₂,...r_{1N}).

14. Edging machine (1) according to any one of the preceding claims, wherein said edging machine (1) comprises a pressing system arranged along said longitudinal axis (L) before of the first pressing device holder module (M1) and comprising:
- a roller (RL) having an axis of rotation (r) perpendicular to said longitudinal axis (L), intended to contact said profile (F) of a door/jamb and exerting a pressure on said edging tape (N).

15. Edging machine (1) according to the preceding claim, wherein said pressing system comprises:
- a roller group (RL₁,RL₂,...RL_{N}) for exerting a further pressure on said edging tape (N), arranged in succession to said roller (RL), wherein said roller group (RL₁,RL₂,...RL_{N}) comprises a plurality of rollers (RL₁,RL₂,...RL_{N}) and each roller (RL₁,RL₂,...RL_{N}) of said plurality of rollers (RL₁,RL₂,...RL_{N}) has a respective axis of rotation (r₁,r₂,...r_{N}) parallel to said axis of rotation (r) of said roller (R).

16. Edging machine (1) according to the preceding claim, wherein said edging machine (1) comprises a support device for supporting said roller group (RL₁,RL₂,...RL_{N}), wherein said support device (SD) is arranged between a first wall (P1) and a second wall (P2) of said edging machine (1) and is connected to said two walls (P1,P2) in so as to rotate around an axis of rotation (T) parallel to said longitudinal axis (L) of said edging machine (1).

17. Edging machine (1) according to any one of claims 14-16, wherein said pressing system comprises at least one further first roller group (R₁^{'},R₂^{'},...R_{N}^{'}) for exerting a pressure on a portion of the edging tape (N) at a first rounded portion of said profile (F),
wherein
said further first roller group (R₁^{'},R₂^{'},...R_{N}^{'}) comprises a plurality of rollers (R₁^{'},R₂^{'},...R_{N}^{'}) and each roller (R₁^{'},R₂^{'},...R_{N}^{'}) of said plurality of rollers (R₁^{'},R₂^{'},...R_{N}^{'}) has a respective axis of rotation (r₁^{'},r₂^{'},...r_{N}^{'}) perpendicular to the longitudinal (L) of the edging machine (1) and parallel to the axis of rotation of the roller (RL).

18. Edging machine (1) according to any one of claims 14-17, wherein said pressing system comprises a further second roller group (R₁^{"},R₂^{"},...R_{N}^{"}) for exerting a pressure on a portion of the edging tape (N) at a second rounded portion of said profile (F),
wherein
said further second roller group (R₁^{"},R₂^{"},...R_{N}^{"}) is arranged in a sector (SC) of said edging machine (1), said sector (SC) being provided with a plurality of slots (S₁,S₂,...S_{N}),
wherein
said further second roller group comprises a plurality of rollers (R₁^{"},R₂^{"},...R_{N}^{"}) and each roller (R₁^{"},R₂^{"},...R_{N}^{"}) of said plurality of rollers (R₁^{"},R₂^{"},...R_{N}^{"}) has a respective axis of rotation (r₁^{"},r₂^{"},...r_{N}^{"}) and is included in a respective roller holder device (PR₁^{"},PR₂^{"},...PR_{N}^{"}), wherein each roller holder device (PR₁^{"},PR₂^{"},...PR_{N}^{"}) is slidly coupled with a respective slot (S₁,S₂,...S_{N}) of said sector (SC) and is provided with respective blocking means (SV₁,SV₂,...SV_{N}) for being blocked in a desired position along said slot (S₁,S₂,...S_{N}).

19. Edging machine (1) according to any one of claims 14-18, wherein said edging machine (1) comprises at least one first hot air blowing device (DA1) for blowing a jet of hot air on the edging tape (N) applied on the profile (F) of a door/jamb, wherein said first hot air blowing device (DA1) is arranged between said pressing system and said first pressing device holder module (M1).

20. Edging machine (1) according to the preceding claim, wherein said edging machine (1) comprises a second hot air blowing device (DA2) for blowing a jet of hot air on the edging tape (N) applied on the profile (F) of a jamb/door, wherein said second hot air blowing device (DA2) is arranged between said pressing system and said first pressing device holder module (M1); said second hot air blowing device (DA2) being faced to said first hot air blowing device (DA1).

## Patentansprüche

1. Kantenanlegemaschine (1) zum Aufbringen eines Umleimers (N) auf ein Profil (F) einer Tür/eines Türstocks, wobei das genannte Profil (F) eine erste Fläche (F1), eine zweite Fläche (F2) und eine dritte Fläche (F3) aufweist, wobei die genannte Kantenanlegemaschine (1) eine Längsachse (L) aufweist und Folgendes umfasst:
- ein Untergestell (B),
- mindestens drei Andrückvorrichtungshaltermodule (M1,M2,M3), die nacheinander entlang der genannten Längsachse (L) angeordnet und mit dem genannten Untergestell (B) gekoppelt sind:
ein erstes Andrückvorrichtungshaltermodul (M1), umfassend:
eine erste Andrückvorrichtung (PD1) zum Ausüben eines Drucks auf einen ersten Abschnitt des genannten Umleimers (N) auf mindestens einen Abschnitt der genannten ersten Fläche (F1), und
eine erste Bewegungseinheit (RP1,RA1) zum Bewegen der genannten ersten Andrückvorrichtung (PD1) in Tiefe und Höhe in Bezug auf das genannte Untergestell (B),
ein zweites Andrückvorrichtungshaltermodul (M2), umfassend:
eine zweite Andrückvorrichtung (PD2) zum Ausüben eines Drucks auf einen zweiten Abschnitt des genannten Umleimers (N) auf mindestens einen Abschnitt der genannten zweiten Fläche (F2),
eine zweite Bewegungseinheit (RP2,RA2) zum Bewegen der genannten zweiten Andrückvorrichtung (PD2) in Tiefe und Höhe in Bezug auf das genannte Untergestell (B), ein drittes Andrückvorrichtungshaltermodul (M3), umfassend:
eine dritte Andrückvorrichtung (PD3) zum Ausüben eines Drucks auf einen dritten Abschnitt des genannten Umleimers (N) auf mindestens einen Abschnitt der genannten dritten Fläche (F3), und
eine dritte Bewegungseinheit (RP3,RA3) zum Bewegen der genannten dritten Andrückvorrichtung (PD3) in Tiefe und Höhe in Bezug auf das genannte Untergestell (B).

2. Kantenanlegemaschine (1) nach Anspruch 1, wobei die genannte erste Bewegungseinheit (RP1,RA1) eine erste Bewegungsvorrichtung (RP1) zum Bewegen der genannten ersten Andrückvorrichtung (PD1) in der Tiefe entlang einer ersten Achse x₁, senkrecht zur genannten Längsachse (L), in einer ersten Richtung und in einer zweiten Richtung, entgegengesetzt zur genannten ersten Richtung, umfasst, und
eine weitere erste Bewegungsvorrichtung (RA1) zum Bewegen der genannten ersten Andrückvorrichtung (PD1) in der Höhe entlang einer zweiten Achse y₁, verschieden von der genannten ersten Achse x₁ und senkrecht zur genannten Längsachse (L), in einer ersten Richtung und in einer zweiten Richtung, entgegengesetzt zur genannten ersten Richtung,
wobei
die genannte zweite Bewegungseinheit (RP2,RA2) Folgendes umfasst:
eine zweite Bewegungsvorrichtung (RP2) zum Bewegen der genannten zweiten Andrückvorrichtung (PD2) in der Tiefe entlang einer ersten Achse x₂, senkrecht zur genannten Längsachse (L), in einer ersten Richtung und in einer zweiten Richtung, entgegengesetzt zur genannten ersten Richtung, und
eine weitere zweite Bewegungsvorrichtung (RA2) zum Bewegen der genannten zweiten Andrückvorrichtung (PD2) in der Höhe entlang einer zweiten Achse y₂, verschieden von der genannten ersten Achse x₂ und senkrecht zur genannten Längsachse (L), in einer ersten Richtung und in einer zweiten Richtung, entgegengesetzt zur genannten ersten Richtung,
wobei
die genannte dritte Bewegungseinheit (RP3,RA3) Folgendes umfasst:
eine dritte Bewegungsvorrichtung (RP3) zum Bewegen der genannten dritten Andrückvorrichtung (PD3) in der Tiefe entlang einer ersten Achse x₃, senkrecht zur genannten Längsachse (L), in einer ersten Richtung und in einer zweiten Richtung, entgegengesetzt zur genannten ersten Richtung, und
eine weitere dritte Bewegungsvorrichtung (RA3) zum Bewegen der genannten dritten Andrückvorrichtung (PD3) in der Höhe entlang einer zweiten Achse y₃, verschieden von der genannten ersten Achse x₃ und senkrecht zur genannten Längsachse (L), in einer ersten Richtung und in einer zweiten Richtung, entgegengesetzt zur genannten ersten Richtung,
wobei
die genannten ersten Achsen x₁, x₂, x₃ zueinander parallel sind und die genannten zweiten Achsen y₁,y₂,y₃ zueinander parallel sind.

3. Kantenanlegemaschine (1) nach dem vorstehenden Anspruch, wobei die genannte kantenanlegemaschine (1) Folgendes umfasst:
eine Steuerlogikeinheit (U), die konfiguriert ist zum:
○ unabhängigen Steuern der Bewegungseinheiten (RP1,RA1; RP2,RA2; RP3,RA3) voneinander,
○ unabhängigen Steuern der genannten ersten Bewegungsvorrichtung (RP1) und der genannten weiteren ersten Bewegungsvorrichtung (RA1) voneinander in Bezug auf die erste Bewegungseinheit (RP1,RA1),
○ unabhängigen Steuern der genannten zweiten Andrückvorrichtung (RP2) und der genannten weiteren zweiten Bewegungsvorrichtung (RA2) voneinander in Bezug auf die zweite Bewegungseinheit (RP2,RA2), und
○ unabhängigen Steuern der genannten dritten Bewegungsvorrichtung (RP3) und der genannten weiteren dritten Bewegungsvorrichtung (RA3) voneinander in Bezug auf die dritte Bewegungseinheit (RP3,RA3).

4. Kantenanlegemaschine (1) nach dem vorstehenden Anspruch, wobei das genannte erste Andrückvorrichtungshaltermodul (M1) Folgendes umfasst:
- ein erstes Trägerelement (SE11) zum Tragen des genannten ersten Andrückvorrichtungshaltermoduls (M1),
-- ein weiteres erstes Trägerelement (SE12) zum Tragen der genannten ersten Andrückvorrichtung (PD1), wobei die genannte erste Andrückvorrichtung (PD1) auf abnehmbare Weise mit dem genannten weiteren ersten Trägerelement (SE12) gekoppelt ist, und die genannte erste Bewegungsvorrichtung (RP1) einen ersten Elektromotor (E11) umfasst, der über einen ersten Schlitten (C1) mit dem genannten ersten Trägerelement (SE11) verbunden ist, sodass die Bewegung des genannten ersten Schlittens (C1) in einer ersten Richtung oder in einer zweiten Richtung, entgegengesetzt zur genannten ersten Richtung, die Bewegung des genannten ersten Andrückvorrichtungshaltermoduls (M1) in dieselbe Richtung entlang der genannten ersten Achse x₁ bewirkt, und
wobei die genannte weitere erste Bewegungsvorrichtung (RA1) einen weiteren ersten Elektromotor umfasst (E12), der über eine erste Schraube mit dem genannten weiteren ersten Trägerelement (SE12) verbunden ist, sodass die Bewegung des genannten weiteren ersten Trägerelements (SE12) in einer ersten Richtung oder in einer zweiten Richtung, entgegengesetzt zur genannten ersten Richtung, die Bewegung der genannten ersten Andrückvorrichtung (PD1) in dieselbe Richtung entlang der genannten zweiten Achse y₁ bewirkt,
wobei
das genannte zweite Andrückvorrichtungshaltermodul (M2) Folgendes umfasst:
- ein zweites Trägerelement (SE21) zum Tragen des genannten zweiten Andrückvorrichtungshaltermoduls (M2),
- ein weiteres zweites Trägerelement (SE22) zum Tragen der genannten zweiten Andrückvorrichtung (PD2), wobei die genannte zweite Andrückvorrichtung (PD2) auf abnehmbare Weise mit dem genannten weiteren zweiten Trägerelement (SE22) gekoppelt ist,
wobei die genannte zweite Bewegungsvorrichtung (RP2) einen zweiten Elektromotor (E21) umfasst, der über einen zweiten Schlitten (C2) mit dem genannten zweiten Trägerelement (SE21) verbunden ist, sodass die Bewegung des genannten zweiten Schlittens (C2) in einer ersten Richtung oder in einer zweiten Richtung, entgegengesetzt zur genannten ersten Richtung, die Bewegung des genannten zweiten Andrückvorrichtungshaltermoduls (M2) in dieselbe Richtung entlang der genannten ersten Achse x₂ bewirkt, wobei die genannte weitere zweite Bewegungsvorrichtung (RA2) einen weiteren zweiten Elektromotor (E22) umfasst, der über eine zweite Schraube mit dem genannten weiteren zweiten Trägerelement (SE22) verbunden ist, sodass die Bewegung des genannten weiteren zweiten Trägerelements (SE22) in einer ersten Richtung oder in einer zweiten Richtung, entgegengesetzt zur genannten ersten Richtung, die Bewegung der genannten zweiten Andrückvorrichtung (PD2) in dieselbe Richtung entlang der genannten zweiten Achse y₂ bewirkt,
wobei
das genannte dritte Andrückvorrichtungshaltermodul (M3) Folgendes umfasst:
- ein drittes Trägerelement (SE31) zum Tragen des genannten dritten Andrückvorrichtungshaltermoduls (M3), und
- ein weiteres drittes Trägerelement (SE32) zum Tragen der genannten dritten Andrückvorrichtung (PD3), wobei die genannte dritte Andrückvorrichtung (PD3) auf abnehmbare Weise mit dem genannten weiteren dritten Trägerelement (SE32) gekoppelt ist,
wobei die genannte dritte Bewegungsvorrichtung (RP3) einen dritten Elektromotor (E31) umfasst, der über einen dritten Schlitten (C3) mit dem genannten dritten Trägerelement (SE31) verbunden ist, sodass die Bewegung des genannten dritten Schlittens (C3) in einer ersten Richtung oder in einer zweiten Richtung, entgegengesetzt zur genannten ersten Richtung, die Bewegung des genannten dritten Andrückvorrichtungshaltermoduls (M3) in dieselbe Richtung entlang der genannten ersten Achse x₃ bewirkt, und
wobei die genannte weitere dritte Bewegungsvorrichtung (RA3) einen weiteren dritten Elektromotor (E32) umfasst, der über eine dritte Schraube mit dem genannten weiteren dritten Trägerelement (SE32) verbunden ist, sodass die Bewegung des genannten weiteren dritten Trägerelements (SE32) in einer ersten Richtung oder in einer zweiten Richtung, entgegengesetzt zur genannten ersten Richtung, die Bewegung der genannten dritten Andrückvorrichtung (PD3) in dieselbe Richtung entlang der genannten zweiten Achse y₃ bewirkt.

5. Kantenanlegemaschine (1) nach einem der vorstehenden Ansprüche, wobei
die genannte erste Andrückvorrichtung (PD1) einen ersten Körper (PD10) umfasst, der sich entlang einer Längsachse (A1) von einem ersten Ende zu einem zweiten Ende erstreckt und eine einzige Symmetrieachse aufweist, wobei die genannte Symmetrieachse mit der genannten Längsachse (A1) der genannten ersten Andrückvorrichtung (PD1) zusammenfällt, und
wobei
der genannte erste Körper (PD10) mit einer Nut (G) versehen ist, die sich zentral um die genannte Längsachse (A1) von dem genannten ersten Ende zu dem genannten zweiten Ende erstreckt.

6. Kantenanlegemaschine (1) nach einem der vorstehenden Ansprüche, wobei
die genannte zweite Andrückvorrichtung (PD2) einen zweiten Körper (PD20) umfasst, der sich entlang einer Längsachse (A2) von einem Ende zu einem zweiten Ende erstreckt und eine einzige Symmetrieachse aufweist, wobei die genannte Symmetrieachse mit der genannten Längsachse (A2) der genannten zweiten Andrückvorrichtung (PD2) zusammenfällt,
wobei
der genannte zweite Körper (PD20) in der Nähe des genannten ersten Endes einen Abschnitt aufweist, der eine Pyramidenstumpfform mit rechteckiger Basis hat.

7. Kantenanlegemaschine (1) nach einem der vorstehenden Ansprüche,
wobei
die genannte dritte Andrückvorrichtung (PD3) einen dritten Körper (PD30) umfasst, der sich entlang einer Längsachse (A3) von einem ersten Ende zu einem zweiten Ende erstreckt und eine einzige Symmetrieachse aufweist, wobei die genannte Symmetrieachse mit der genannten Längsachse (A3) der genannten dritten Andrückvorrichtung (PD3) zusammenfällt, und
wobei
der genannte dritte Körper (PD30) in der Nähe des genannten ersten Endes einen Abschnitt aufweist, der eine Pyramidenstumpfform mit rechteckiger Basis hat.

8. Kantenanlegemaschine (1) nach einem der vorstehenden Ansprüche, wobei
mindestens eine Andrückvorrichtung zwischen der genannten ersten Andrückvorrichtung (PD1), der genannten zweiten Andrückvorrichtung (PD2) und der genannten dritten Andrückvorrichtung (PD3) einen jeweiligen Hohlraum sowie einen oder mehrere jeweilige Einlässe (I₁₁,I₁₂,...I_{1N}; I₂₁,I₂₂,...I_{2N}, I₃₁,I₃₂,...I_{3N}) für den Durchgang eines Kühlfluids in den genannten Hohlraum und einen oder mehrere jeweilige Auslässe (U₁₁,U₁₂,...U_{1N}; U₂₁,U₂₂,...U_{2N}; U₃₁,U₃₂,...U_{3N}) zum Ausgeben des genannten Kühlfluids aus der genannten Andrückvorrichtung umfasst.

9. Kantenanlegemaschine (1) nach einem der vorstehenden Ansprüche, wobei mindestens eine Andrückvorrichtung zwischen der genannten ersten Andrückvorrichtung (PD1), der genannten zweiten Andrückvorrichtung (PD2) und der genannten dritten Andrückvorrichtung (PD3) Heizmittel zum Erhitzen der genannten mindestens einen Andrückvorrichtung umfasst.

10. Kantenanlegemaschine nach Anspruch 9, wobei die genannte mindestens eine Andrückvorrichtung einen jeweiligen Hohlraum sowie einen oder mehrere jeweilige Einlässe (I₁₁,I₁₂,...I_{1N}; I₂₁,I₂₂,...I_{2N}, I₃₁,I₃₂,...I_{3N}) und einen oder mehrere jeweilige Auslässe (U₁₁,U₁₂,...U_{1N}; U₂₁,U₂₂,...U_{2N}; U₃₁,U₃₂,...U_{3N}) umfasst, und das genannte Heizmittel ein Heizfluid umfasst, sodass das genannte Heizfluid in den genannten einen oder die mehreren Einlässe (I₁₁,I₁₂,...I_{1N}; I₂₁,I₂₂,...I_{2N}; I₃₁,I₃₂,...I_{3N}) eintritt und aus dem genannten einen oder den mehreren Auslässen (U₁₁,U₁₂,...U_{1N}; U₂₁,U₂₂,...U_{2N}; U₃₁,U₃₂,...U_{3N}) austritt.

11. Kantenanlegemaschine nach Anspruch 9, wobei das genannte Heizmittel mindestens einen Widerstand umfasst, der innerhalb der genannten mindestens einen Andrückvorrichtung angeordnet ist.

12. Kantenanlegemaschine (1) nach einem der vorstehenden Ansprüche, wobei die genannte kantenanlegemaschine (1) eine erste Rollengruppe (RL₁₁,RL₁₂,...RL_{1N}) zum Ausüben eines Drucks auf den genannten Umleimer (N) umfasst, wobei die genannte erste Rollengruppe (RL₁₁,RL₁₂,...RL_{1N}) nachfolgend zum genannten dritten Andrückvorrichtungshaltermodul (PD3) angeordnet ist und eine Vielzahl von ersten Rollen (RL₁₁,RL₁₂,...RL_{1N}) umfasst, wobei jede erste Rolle (RL₁₁,RL₁₂,...RL_{1N}) der genannten ersten Rollengruppe (RL₁₁,RL₁₂,...RL_{1N}) eine jeweilige erste Rotationsachse (r₁₁,r₁₂,...r_{1N}) senkrecht zur genannten Längsachse (L) aufweist.

13. Kantenanlegemaschine (1) nach dem vorstehenden Anspruch, wobei die genannte kantenanlegemaschine (1) eine zweite Rollengruppe (RL₂₁,RL₂₂,...RL_{2N}) zum Ausüben eines weiteren Drucks auf den genannten Umleimer (N) umfasst, wobei die genannte zweite Rollengruppe (RL₂₁,RL₂₂,...RL_{2N}) nachfolgend zur genannten ersten Rollengruppe (RL₁₁,RL₁₂,...RL_{1N}) angeordnet ist und eine Vielzahl von zweiten Rollen (RL₂₁,RL₂₂,...RL_{2N}) umfasst, wobei jede zweite Rolle (RL₂₁,RL₂₂,...RL_{2N}) der genannten zweiten Rollengruppe (RL₂₁,RL₂₂,...RL_{2N}) eine jeweilige zweite Rotationsachse (r₂₁,r₂₂,...r_{2N}) senkrecht zur genannten Längsachse (L) und zur genannten ersten Rotationsachse (r₁₁,r₁₂,...r_{1N}) aufweist.

14. Kantenanlegemaschine (1) nach einem der vorstehenden Ansprüche, wobei die genannte kantenanlegemaschine (1) ein Andrücksystem umfasst, das entlang der genannten Längsachse (L) vor dem ersten Andrückvorrichtungshaltermodul (M1) angeordnet ist und Folgendes umfasst:
- eine Rolle (RL) mit einer Rotationsachse (r) senkrecht zur genannten Längsachse (L), die dazu bestimmt ist, das genannte Profil (F) einer Tür/eines Türstocks zu berühren und einen Druck auf den genannten Umleimer (N) auszuüben.

15. Kantenanlegemaschine (1) nach dem vorstehenden Anspruch, wobei das genannte Andrücksystem Folgendes umfasst:
- eine Rollengruppe (RL₁,RL₂,...RL_{N}) zum Ausüben eines weiteren Drucks auf den genannten Umleimer (N), die nachfolgend zur genannten Rolle (RL) angeordnet ist, wobei die genannte Rollengruppe (RL₁,RL₂,...RL_{N}) eine Vielzahl von Rollen (RL₁,RL₂,...RL_{N}) umfasst und jede Rolle (RL₁,RL₂,...RL_{N}) der genannten Vielzahl von Rollen (R_{L1},R_{L2},...RL_{N}) eine jeweilige Rotationsachse (r_{1,}r₂,...r_{N}) parallel zur genannten Rotationsachse (r) der genannten Rolle (R) aufweist.

16. Kantenanlegemaschine (1) nach dem vorstehenden Anspruch, wobei die genannte kantenanlegemaschine (1) eine Trägervorrichtung zum Tragen der genannten Rollengruppe (RL₁,RL₂,...RL_{N}) umfasst, wobei die genannte Trägervorrichtung (SD) zwischen einer ersten Wand (P1) und einer zweiten Wand (P2) der genannten kantenanlegemaschine (1) angeordnet und mit den genannten zwei Wänden (P1,P2) so verbunden ist, dass sie sich um eine Rotationsachse (T) parallel zur genannten Längsachse (L) der genannten kantenanlegemaschine (1) dreht.

17. Kantenanlegemaschine (1) nach einem der Ansprüche 14-16, wobei das genannte Andrücksystem mindestens eine weitere erste Rollengruppe (R₁',R₂',...R_{N}') zum Ausüben eines Drucks auf einen Abschnitt des Umleimers (N) an einem ersten abgerundeten Abschnitt des genannten Profils (F) umfasst,
wobei
wobei die weitere erste Rollengruppe (R₁',R₂',...R_{N}') eine Mehrzahl von Rollen (R₁',R₂',...R_{N}') umfasst und jede Rolle (R₁',R₂',...R_{N}') der besagten Mehrzahl von Rollen (R₁',R₂',...R_{N}') eine jeweilige Drehachse (r₁', r₂',...r_{N}') aufweist, die senkrecht zur Längsrichtung (L) der Umleimmaschine (1) und parallel zur Drehachse der Rolle (RL) verläuft.

18. Kantenanlegemaschine (1) nach einem der Ansprüche 14-17, wobei das besagte Andrucksystem eine weitere zweite Rollengruppe (R₁",R₂",...R_{N}") zum Ausüben eines Drucks auf einen Abschnitt des Umleimbandes (N) an einem zweiten abgerundeten Abschnitt des besagten Profils (F) umfasst,
wobei
die weitere zweite Rollengruppe (R₁", R₂",...R_{N}") in einem Sektor (SC) der Kantenanlegemaschine (1) angeordnet ist, wobei der Sektor (SC) mit einer Vielzahl von Schlitzen (S₁, S₂,...S_{N}) versehen ist,
wobei
die besagte weitere zweite Rollengruppe eine Mehrzahl von Rollen (R₁",R₂",...R_{N}") umfasst und jede Rolle (R₁",R₂",...R_{N}") der besagten Mehrzahl von Rollen (R₁",R₂",...R_{N}") eine jeweilige Drehachse (r₁",r₂",...r_{N}") aufweist und in einer jeweiligen Rollenhaltervorrichtung (PR₁",PR₂",...PR_{N}") enthalten ist, wobei jede Rollenhaltervorrichtung (PR₁",PR₂",...PR_{N}") gleitend mit einem jeweiligen Schlitz (S₁,S₂,...S_{N}) des besagten Sektors (SC) gekoppelt ist und mit jeweiligen Blockiermitteln (SV₁,SV₂,...SV_{N}) versehen ist, um in einer gewünschten Position entlang des besagten Schlitzes (S₁,S₂,...S_{N}) blockiert zu werden.

19. Kantenanlegemaschine (1) nach einem der Ansprüche 14-18, wobei die besagte kantenanlegemaschine (1) mindestens eine erste Heißluftblasvorrichtung (DA1) zum Blasen eines Heißluftstrahls auf das auf das Profil (F) einer Tür/eines Rahmens aufgebrachte Umleimband (N) umfasst, wobei die besagte erste Heißluftblasvorrichtung (DA1) zwischen dem besagten Andrucksystem und dem besagten ersten Andruckvorrichtungshaltermodul (M1) angeordnet ist.

20. Kantenanlegemaschine (1) nach dem vorhergehenden Anspruch, wobei die besagte kantenanlegemaschine (1) eine zweite Heißluftblasvorrichtung (DA2) zum Blasen eines Heißluftstrahls auf das auf das Profil (F) eines Rahmens/einer Tür aufgebrachte Umleimband (N) umfasst, wobei die besagte zweite Heißluftblasvorrichtung (DA2) zwischen dem besagten Andrucksystem und dem besagten ersten Andruckvorrichtungshaltermodul (M1) angeordnet ist; wobei die besagte zweite Heißluftblasvorrichtung (DA2) der besagten ersten Heißluftblasvorrichtung (DA1) zugewandt ist.

## Revendications

1. Machine de chantage (1) destinée à appliquer une bande de chant (N) sur un profil (F) d'une porte ou d'un montant, dans laquelle ledit profil (F) présente une première face (F1), une deuxième face (F2) et une troisième face (F3), ladite machine de chantage (1) ayant un axe longitudinal (L) et comprenant:
- un bâti (B),
- au moins trois modules porte-dispositif de pression (M1,M2,M3) disposés successivement le long dudit axe longitudinal (L) et couplés audit bâti (B):
un premier module porte-dispositif de pression (M1) comprenant:
un premier dispositif de pression (PD1) destiné à exercer une pression sur une première partie de ladite bande de chant (N) au niveau d'au moins une partie de ladite première face (F1), et
une première unité de déplacement (RP1,RA1) destinée à déplacer ledit premier dispositif de pression (PD1) en profondeur et en hauteur par rapport audit bâti (B),
un deuxième module porte-dispositif de pression (M2) comprenant:
un deuxième dispositif de pression (PD2) destiné à exercer une pression sur une deuxième partie de ladite bande de chant (N) au niveau d'au moins une partie de ladite deuxième face (F2),
une deuxième unité de déplacement (RP2,RA2) destinée à déplacer ledit deuxième dispositif de pression (PD2) en profondeur et en hauteur par rapport audit bâti (B),
un troisième module porte-dispositif de pression (M3) comprenant:
un troisième dispositif de pression (PD3) destiné à exercer une pression sur une troisième partie de ladite bande de chant (N) au niveau d'au moins une partie de ladite troisième face (F3), et
une troisième unité de déplacement (RP3,RA3) destinée à déplacer ledit troisième dispositif de pression (PD3) en profondeur et en hauteur par rapport audit bâti (B).

2. Machine de plaquage de chants (1) selon la revendication 1, dans laquelle
ladite première unité de déplacement (RP1,RA1) comprend un premier dispositif de déplacement (RP1) destiné à déplacer en profondeur ledit premier dispositif de pression (PD1) selon un premier axe x₁, perpendiculaire audit axe longitudinal (L), dans une première direction et dans une deuxième direction opposée à ladite première direction, et
un premier dispositif de déplacement supplémentaire (RA1) destiné à déplacer en hauteur ledit premier dispositif de pressage (PD1) suivant un deuxième axe y₁, distinct dudit premier axe x₁ et perpendiculaire audit axe longitudinal (L), dans une première direction et dans une deuxième direction opposée à ladite première direction,
dans laquelle
ladite deuxième unité de déplacement (RP2,RA2) comprend:
un deuxième dispositif de déplacement (RP2) destiné à déplacer en profondeur ledit deuxième dispositif de pressage (PD2) suivant un premier axe x₂, perpendiculaire audit axe longitudinal (L), dans une première direction et dans une deuxième direction opposée à ladite première direction, et
un deuxième dispositif de déplacement supplémentaire (RA2) destiné à déplacer en hauteur ledit deuxième dispositif de pressage (PD2) suivant un deuxième axe y₂, distinct dudit premier axe x₂ et perpendiculaire audit axe longitudinal (L), dans une première direction et dans une deuxième direction opposée à ladite première direction,
dans laquelle
ladite troisième unité de déplacement (RP3,RA3) comprend:
un troisième dispositif de déplacement (RP3) destiné à déplacer en profondeur ledit troisième dispositif de pressage (PD3) suivant un premier axe x₃, perpendiculaire audit axe longitudinal (L), dans une première direction et dans une deuxième direction opposée à ladite première direction, et
un troisième dispositif de déplacement supplémentaire (RA3) destiné à déplacer en hauteur ledit troisième dispositif de pressage (PD3) suivant un deuxième axe y₃, distinct dudit premier axe x₃ et perpendiculaire audit axe longitudinal (L), dans une première direction et dans une deuxième direction, et opposée à ladite première direction,
dans laquelle
lesdits premiers axes x₁, x₂, x₃ sont parallèles entre eux et lesdits deuxièmes axes y₁,y₂,y₃ sont parallèles entre eux.

3. Machine de plaquage de chants (1) selon la revendication précédente, dans laquelle ladite machine de plaquage de chants (1) comprend:
une unité logique de commande (U) configurée pour:
∘ commander les unités de déplacement (RP1,RA1; RP2,RA2; RP3,RA3) indépendamment les unes des autres,
∘ en référence à la première unité de déplacement (RP1,RA1), commander ledit premier dispositif de déplacement (RP1) et ledit premier dispositif de déplacement supplémentaire (RA1) indépendamment l'un de l'autre,
∘ en référence à la deuxième unité de déplacement (RP2,RA2), commander ledit deuxième dispositif de déplacement (RP2) et ledit deuxième dispositif de déplacement supplémentaire (RA2) indépendamment l'un de l'autre, et
∘ en référence à la troisième unité de déplacement (RP3,RA3), commander ledit troisième dispositif de déplacement (RP3) et ledit troisième dispositif de déplacement supplémentaire (RA3) indépendamment l'un de l'autre.

4. Machine de plaquage de chants (1) selon la revendication précédente, dans laquelle ledit premier module porte-dispositif de pressage (M1) comprend:
- un premier élément de support (SE11) destiné à supporter ledit premier module porte-dispositif de pressage (M1),
-- un premier élément de support supplémentaire (SE12) destiné à supporter ledit premier dispositif de pressage (PD1), ledit premier dispositif de pressage (PD1) étant couplé de manière amovible audit premier élément de support supplémentaire (SE12), et ledit premier dispositif de déplacement (RP1) comprenant un premier moteur électrique (E11) relié audit premier élément de support (SE11) par l'intermédiaire d'un premier coulisseau (C1), de sorte que le déplacement dudit premier coulisseau (C1) dans une première direction ou dans une deuxième direction opposée à ladite première direction entraîne le déplacement dudit premier module porte-dispositif de pressage (M1) dans la même direction, suivant ledit premier axe x₁, et
ledit premier dispositif de déplacement supplémentaire (RA1) comprenant un premier moteur électrique supplémentaire (E12) relié audit premier élément de support supplémentaire (SE12) par l'intermédiaire d'une première vis, de sorte que le déplacement dudit premier élément de support supplémentaire (SE12) dans une première direction ou dans une deuxième direction opposée à ladite première direction entraîne le déplacement dudit premier dispositif de pressage (PD1) dans la même direction, suivant ledit deuxième axe y₁, dans laquelle
ledit deuxième module porte-dispositif de pressage (M2) comprend:
- un deuxième élément de support (SE21) destiné à supporter ledit deuxième module porte-dispositif de pressage (M2),
- un deuxième élément de support supplémentaire (SE22) destiné à supporter ledit deuxième dispositif de pressage (PD2), ledit deuxième dispositif de pressage (PD2) étant couplé de manière amovible audit deuxième élément de support supplémentaire (SE22),
ledit deuxième dispositif de déplacement (RP2) comprenant un deuxième moteur électrique (E21) relié audit deuxième élément de support (SE21) par l'intermédiaire d'un deuxième coulisseau (C2), de sorte que le déplacement dudit deuxième coulisseau (C2) dans une première direction ou dans une deuxième direction opposée à ladite première direction entraîne le déplacement dudit deuxième module porte-dispositif de pressage (M2) dans la même direction, suivant ledit premier axe x₂,
ledit deuxième dispositif de déplacement supplémentaire (RA2) comprenant un deuxième moteur électrique supplémentaire (E22) relié audit deuxième élément de support supplémentaire (SE22) par l'intermédiaire d'une deuxième vis, de sorte que le déplacement dudit deuxième élément de support supplémentaire (SE22) dans une première direction ou dans une deuxième direction opposée à ladite première direction entraîne le déplacement dudit deuxième dispositif de pressage (PD2) dans la même direction, suivant ledit deuxième axe y₂,
dans laquelle
ledit troisième module porte-dispositif de pressage (M3) comprend:
- un troisième élément de support (SE31) destiné à supporter ledit troisième module porte-dispositif de pressage (M3), et
- un troisième élément de support supplémentaire (SE32) destiné à supporter ledit troisième dispositif de pressage (PD3), ledit troisième dispositif de pressage (PD3) étant couplé de manière amovible audit troisième élément de support supplémentaire (SE32), ledit troisième dispositif de déplacement (RP3) comprenant un troisième moteur électrique (E31) relié audit troisième élément de support (SE31) par l'intermédiaire d'un troisième coulisseau (C3), de sorte que le déplacement dudit troisième coulisseau (C3) dans une première direction ou dans une deuxième direction opposée à ladite première direction entraîne le déplacement dudit troisième module porte-dispositif de pressage (M3) dans la même direction, suivant ledit premier x₃, et
ledit troisième dispositif de déplacement supplémentaire (RA3) comprenant un troisième moteur électrique supplémentaire (E32) relié audit troisième élément de support supplémentaire (SE32) par l'intermédiaire d'une troisième vis, de sorte que le déplacement dudit troisième élément de support supplémentaire (SE32) dans une première direction ou dans une deuxième direction opposée à ladite première direction entraîne le déplacement dudit troisième dispositif de pressage (PD3) dans la même direction, suivant ledit deuxième axe y₃.

5. Machine de plaquage de chants (1) selon l'une quelconque des revendications précédentes, dans laquelle
ledit premier dispositif de pressage (PD1) comprend un premier corps (PD10) s'étendant suivant un axe longitudinal (A1), d'une première extrémité à une deuxième extrémité, et présentant un unique axe de symétrie, ledit axe de symétrie coïncidant avec ledit axe longitudinal (A1) dudit premier dispositif de pressage (PD1), et
dans laquelle
ledit premier corps (PD10) est pourvu d'une rainure (G) s'étendant de manière centrale autour dudit axe longitudinal (A1), de ladite première extrémité à ladite deuxième extrémité.

6. Machine de plaquage de chants (1) selon l'une quelconque des revendications précédentes, dans laquelle
ledit deuxième dispositif de pressage (PD2) comprend un deuxième corps (PD20) s'étendant suivant un axe longitudinal (A2), d'une première extrémité à une deuxième extrémité, et présentant un unique axe de symétrie, ledit axe de symétrie coïncidant avec ledit axe longitudinal (A2) dudit deuxième dispositif de pressage (PD2),
dans laquelle
ledit deuxième corps (PD20) présente, à proximité de ladite première extrémité, une portion ayant une forme de pyramide tronquée à base rectangulaire.

7. Machine de plaquage de chants (1) selon l'une quelconque des revendications précédentes,
dans laquelle
ledit troisième dispositif de pressage (PD3) comprend un troisième corps (PD30) s'étendant suivant un axe longitudinal (A3), d'une première extrémité à une deuxième extrémité, et présentant un unique axe de symétrie, ledit axe de symétrie coïncidant avec ledit axe longitudinal (A3) dudit troisième dispositif de pressage (PD3), et
dans laquelle
ledit troisième corps (PD30) présente, à proximité de ladite première extrémité, une portion ayant une forme de pyramide tronquée à base rectangulaire.

8. Machine de plaquage de chants (1) selon l'une quelconque des revendications précédentes, dans laquelle
au moins un dispositif de pressage parmi ledit premier dispositif de pressage (PD1), ledit deuxième dispositif de pressage (PD2) et ledit troisième dispositif de pressage (PD3) comprend une cavité respective, ainsi qu'une ou plusieurs entrées respectives (I₁₁,I₁₂,...I_{1N}; I₂₁,I₂₂,...I_{2N}, I₃₁,I₃₂,...I_{3N}) pour le passage d'un fluide réfrigérant à l'intérieur de ladite cavité et une ou plusieurs sorties respectives (U₁₁,U₁₂,...U_{1N}; U₂₁,U₂₂,...U_{2N}; U₃₁,U₃₂,...U_{3N}) pour évacuer ledit fluide réfrigérant hors dudit dispositif de pressage.

9. Machine de plaquage de chants (1) selon l'une quelconque des revendications précédentes, dans laquelle au moins un dispositif de pressage parmi ledit premier dispositif de pressage (PD1), ledit deuxième dispositif de pressage (PD2) et ledit troisième dispositif de pressage (PD3) comprend des moyens de chauffage destinés à chauffer ledit au moins un dispositif de pressage.

10. Machine de plaquage de chants selon la revendication 9, dans laquelle ledit au moins un dispositif de pressage comprend une cavité respective, ainsi qu'une ou plusieurs entrées respectives (I₁₁,I₁₂,...I_{1N}; I₂₁,I₂₂,...I_{2N}, I₃₁,I₃₂,...I_{3N}) et une ou plusieurs sorties respectives (U₁₁,U₁₂,...U_{1N}; U₂₁,U₂₂,...U_{2N}; U₃₁,U₃₂,...U_{3N}), et lesdits moyens de chauffage comprennent un fluide chauffant, de sorte que ledit fluide chauffant entre par ladite une ou plusieurs entrées (I₁₁,I₁₂,...I_{1N}; I₂₁,I₂₂,...I_{2N}; I₃₁,I₃₂,...I_{3N}) et sorte par ladite une ou plusieurs sorties (U₁₁,U₁₂,...U_{1N}; U₂₁,U₂₂,...U_{2N}; U₃₁,U₃₂,...U_{3N}).

11. Machine de plaquage de chants selon la revendication 9, dans laquelle lesdits moyens de chauffage comprennent au moins une résistance disposée à l'intérieur dudit au moins un dispositif de pressage.

12. Machine de plaquage de chants (1) selon l'une quelconque des revendications précédentes, dans laquelle ladite machine de plaquage de chants (1) comprend un premier groupe de rouleaux (RL₁₁,RL₁₂,...RL_{1N}) destinée à exercer une pression sur ladite bande de chant (N), dans laquelle ledit premier groupe de rouleaux (RL₁₁,RL₁₂,...RL_{1N}) est disposé en succession dudit troisième module porte-dispositif de pressage (PD3) et comprend une pluralité de premiers rouleaux (RL₁₁,RL₁₂,...RL_{1N}), dans laquelle chaque premier rouleau (RL₁₁,RL₁₂,...RL_{1N}) dudit premier groupe de rouleaux (RL₁₁,RL₁₂,...RL_{1N}) présente un premier axe de rotation respectif (r₁₁,r₁₂,...r_{1N}) perpendiculaire audit axe longitudinal (L).

13. Machine de plaquage de chants (1) selon la revendication précédente, dans laquelle ladite machine de plaquage de chants (1) comprend un deuxième groupe de rouleaux (RL₂₁,RL₂₂,...RL_{2N}) destiné à exercer une pression supplémentaire sur ladite bande de chant (N), dans laquelle ledit deuxième groupe de rouleaux (RL₂₁,RL₂₂,...RL_{2N}) est disposé en succession dudit premier groupe de rouleaux (RL₁₁,RL₁₂,...RL_{1N}) et comprend une pluralité de deuxièmes rouleaux (RL₂₁,RL₂₂,...RL_{2N}), dans laquelle chaque deuxième rouleau (RL₂₁,RL₂₂,...RL_{2N}) dudit deuxième groupe de rouleaux (RL₂₁,RL₂₂,...RL_{2N}) présente un deuxième axe de rotation respectif (r₂₁,r₂₂,...r_{2N}) perpendiculaire audit axe longitudinal (L) et audit premier axe de rotation (r₁₁,r₁₂,...r_{1N}).

14. Machine de plaquage de chants (1) selon l'une quelconque des revendications précédentes, dans laquelle ladite machine de plaquage de chants (1) comprend un système de pressage disposé suivant ledit axe longitudinal (L), en amont du premier module porte-dispositif de pressage (M1), et comprenant:
- un rouleau (RL) présentant un axe de rotation (r) perpendiculaire audit axe longitudinal (L), destiné à entrer en contact avec ledit profilé (F) d'une porte/d'un montant et à exercer une pression sur ladite bande de chant (N).

15. Machine de plaquage de chants (1) selon la revendication précédente, dans laquelle ledit système de pressage comprend:
- un groupe de rouleaux (RL₁,RL₂,...RL_{N}) destiné à exercer une pression supplémentaire sur ladite bande de chant (N), disposé en succession dudit rouleau (RL), dans laquelle ledit groupe de rouleaux (RL₁,RL₂,...RL_{N}) comprend une pluralité de rouleaux (RL₁,RL₂,...RL_{N}) et chaque rouleau (RL₁,RL₂,...RL_{N}) de ladite pluralité de rouleaux (R_{L1},R_{L2},...RL_{N}) présente un axe de rotation respectif (r_{1,}r₂,...r_{N}) parallèle audit axe de rotation (r) dudit rouleau (R).

16. Machine de plaquage de chants (1) selon la revendication précédente, dans laquelle ladite machine de plaquage de chants (1) comprend un dispositif de support destiné à supporter ledit groupe de rouleaux (RL₁,RL₂,...RL_{N}), dans laquelle ledit dispositif de support (SD) est disposé entre une première paroi (P1) et une deuxième paroi (P2) de ladite machine de plaquage de chants (1) et est relié auxdites deux parois (P1,P2) de manière à pouvoir tourner autour d'un axe de rotation (T) parallèle audit axe longitudinal (L) de ladite machine de plaquage de chants (1).

17. Machine de plaquage de chants (1) selon l'une quelconque des revendications 14-16, dans laquelle ledit système de pressage comprend au moins un premier groupe de rouleaux supplémentaire (R₁',R₂',...R_{N}') destiné à exercer une pression sur une portion de ladite bande de chant (N) au niveau d'une première portion arrondie dudit profilé (F),
dans laquelle
ledit premier groupe de rouleaux supplémentaire (R₁',R₂',...R_{N}') comprend une pluralité de rouleaux (R₁',R₂',...R_{N}') et chaque rouleau (R₁',R₂',...R_{N}') de ladite pluralité de rouleaux (R₁',R₂',...R_{N}') présente un axe de rotation respectif (r₁',r₂',...r_{N}') perpendiculaire à l'axe longitudinal (L) de ladite machine de plaquage de chants (1) et parallèle à l'axe de rotation dudit rouleau (RL).

18. Machine de plaquage de chants (1) selon l'une quelconque des revendications 14-17, dans laquelle ledit système de pressage comprend un deuxième groupe de rouleaux supplémentaire (R₁",R₂",...R_{N}") destiné à exercer une pression sur une portion de ladite bande de chant (N) au niveau d'une deuxième portion arrondie dudit profilé (F),
dans laquelle
ledit second groupe de rouleaux supplémentaire (R₁",R₂",...R_{N}") est disposé dans un secteur (SC) de ladite machine de plaquage de chants (1), ledit secteur (SC) étant pourvu d'une pluralité de fentes (S₁,S₂,...S_{N}),
dans laquelle
ledit deuxième groupe de rouleaux supplémentaire comprend une pluralité de rouleaux (R₁",R₂",...R_{N}") et chaque rouleau (R₁",R₂",...R_{N}") de ladite pluralité de rouleaux (R₁",R₂",...R_{N}") possède un axe de rotation respectif (r₁",r₂",...r_{N}") et est inclus dans un dispositif porte-rouleau respectif (PR₁",PR₂",...PR_{N}"), dans laquelle chaque dispositif porte-rouleau (PR₁",PR₂",...PR_{N}") est couplé par coulissement avec une fente respective (S₁,S₂,...S_{N}) dudit secteur (SC) et est pourvu de moyens de blocage respectifs (SV₁,SV₂,...SV_{N}) destinés à être bloqués dans une position souhaitée le long de ladite fente (S₁,S₂,...S_{N}).

19. Machine de plaquage de chants (1) selon l'une quelconque des revendications 14-18, dans laquelle ladite machine de plaquage de chants (1) comprend au moins un premier dispositif de soufflage d'air chaud (DA1) destiné à souffler un jet d'air chaud sur la bande de chant (N) appliquée sur le profilé (F) d'une porte/d'un montant, dans laquelle ledit premier dispositif de soufflage d'air chaud (DA1) est disposé entre ledit système de pressage et ledit premier module porte-dispositif de pressage (M1).

20. Machine de plaquage de chants (1) selon la revendication précédente, dans laquelle ladite machine de plaquage de chants (1) comprend un deuxième dispositif de soufflage d'air chaud (DA2) destiné à souffler un jet d'air chaud sur la bande de chant (N) appliquée sur le profilé (F) d'un montant/d'une porte, dans laquelle ledit deuxième dispositif de soufflage d'air chaud (DA2) est disposé entre ledit système de pressage et ledit premier module porte-dispositif de pressage (M1); ledit deuxième dispositif de soufflage d'air chaud (DA2) étant en regard dudit premier dispositif de soufflage d'air chaud (DA1).
